# EUROPEAN PATENT SPECIFICATION

(11) **EP 3 913 986 B1**
(45) Date of publication and mention of the grant of the patent: **11.05.2022**
(21) Application number: 20175691.3
(22) Date of filing: 20.05.2020
(51) Int. Cl.: H04W 48/18, H04W 48/02, H04W 8/06

(54) **METHOD FOR APPLYING FREQUENCY RESTRICTIONS TO SLICES IN A 5G SYSTEM**
VERFAHREN ZUM ANWENDEN VON FREQUENZBESCHRÄNKUNGEN AUF SCHEIBEN IN EINEM 5G-SYSTEM
PROCÉDÉ POUR APPLIQUER DES RESTRICTIONS DE FRÉQUENCE À DES TRANCHES DANS UN SYSTÈME 5G

(43) Date of publication of application: 24.11.2021
(73) Proprietor: Deutsche Telekom AG, 53113 Bonn (DE)
(72) Inventor: COLOM IKUNO, Josep, 2100 Korneuburg (AT); ZIMMERMANN, Gerd, 64331 Weiterstadt (DE)
(74) Representative: Vossius & Partner Patentanwälte Rechtsanwälte mbB

(56) References cited:
- EP-A1- 3 471 464
- SAMSUNG ET AL: "Key Issue on 5GC assisted cell selection to access network slice", 3GPP DRAFT; R2-2004306.ZIP S2-2001467, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Incheon, Korea; 20200113 - 20200117 17 May 2020 (2020-05-17), XP051886683, Retrieved from the Internet: URL:https://ftp.3gpp.org/tsg_ran/WG2_RL2/T SGR2_110-e/Docs/R2-2004306.zip S2-2001467.zip S2-2001467 was 0691 - KI for cell selection.doc [retrieved on 2020-05-17]
- "3rd Generation Partnership Project; Technical Specification Group Services and System Aspects; Procedures for the 5G System (5GS); Stage 2 (Release 16)", 3GPP STANDARD; TECHNICAL SPECIFICATION; 3GPP TS 23.502, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. V16.4.0 27 March 2020 (2020-03-27), pages 1-582, XP051861092, Retrieved from the Internet: URL:ftp://ftp.3gpp.org/Specs/archive/23_se ries/23.502/23502-g40.zip 23502-g40.docx [retrieved on 2020-03-27]
- LG ELECTRONICS: "Discussion on Network Slicing Selection", 3GPP DRAFT; S1-201027, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG1, no. 20200210 - 20200214 6 February 2020 (2020-02-06), XP051846914, Retrieved from the Internet: URL:https://ftp.3gpp.org/tsg_sa/WG1_Serv/T SGS1_89e_ElectronicMeeting/Docs/S1-201027. zip S1-201027 Discussion on Network Slicing.docx [retrieved on 2020-02-06]

## Description

### Field of the invention

This invention relates to a method for applying frequency restrictions to slices in a 5G network.

### Background

The 5G standard specifies different methods to realize Non-Public Networks (NPNs). There, the options of deploying Standalone Non-Public Networks (SNPNs) and Public Network Integrated NPNs (PNI-NPNs) exists.

In the latter case, as defined in TS 23.501, the PNI-NPN provides a non-public network deployed with the support of a Public Land Mobile Network (PLMN). Currently, two main mechanisms are specified to realize PNI-NPNs:
- Slicing: used for segmenting the network at a service layer and to provide traffic isolation/specific QoS to traffic on each slide.
- Closed Access Groups (CAG): Used to restrict access to given cells.

Additionally, regulators around the world are starting to auction 5G spectrum for localized use, as opposed to the usual national spectrum auction model. Such spectrum ranges are aimed at industrial/enterprise use (e.g. factory automation).

One particular scenario that telecom operators consider is to manage such privately-owned spectrum ranges on behalf of the owner/lessee to deploy PNI-NPNs serving the customer's needs.

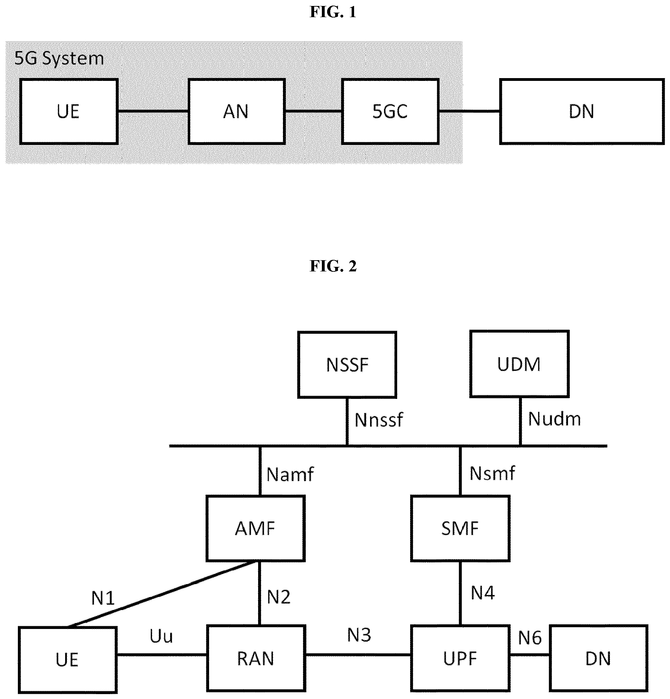

FIG. 1 illustrates an exemplary 5G System (5GS) that includes a User Equipment (UE) connected to a Data Network (DN), e.g. the Internet, via an Access Network (AN) and a 5G Core (5GC). In the 5GS, Network Slice Selection Assistance Information (NSSAI) is employed to indicate a set of slices a UE is allowed to access. A NSSAI is composed of a list of Single Network Slice Selection Assistance Information (S-NSSAI). A S-NSSAI is an identifier composed of an SST identifier (Slice/Service Type) and an optional SD identifier (Slice Differentiator).

FIG. 2 illustrates an exemplary 5GC comprising some of the functional entities as defined in TS 23.501 under the term Network Functions (NFs) as well as the interfaces between them. In this example, the AN is a Radio Access Network (RAN).

In FIG. 2, the 5GC comprises an Access and Mobility Management Function (AMF), a Session Management Function (SMF), a User Plane Function (UPF), a Network Slice Selection Function (NSSF) and a Unified Data Management (UDM). The AMF terminates the RAN Control Plane (CP) interface (N2), NAS interface (N1), and is configured to perform access authentication and access authorization. The SMF is configured to perform session management. The NSSF is configured to select the set of network slices serving the UE, to determine an allowed/configured NSSAI, and to determine the AMF or AMF set to be used to serve the UE. The UDM is configured to perform subscriber management. The UPF is the user plane (UP) function and is configured to perform packet routing and forwarding.

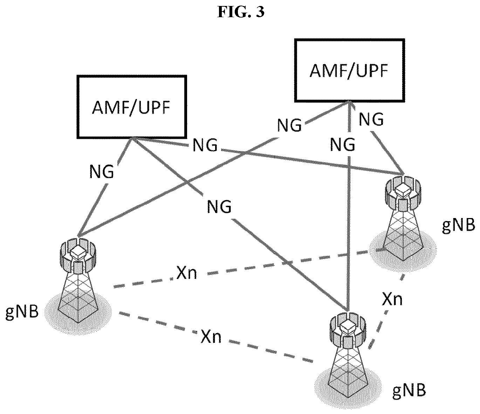

FIG. 3 illustrates in more detail an exemplary RAN architecture. In FIG. 3, the RAN comprises a plurality of gNBs, defined in TS 38.300 as a node providing NR (New Radio, that is 5G radio interface) user plane and control plane protocol terminations towards the UE, and connected via the NG interface to the 5GC, i.e. to the AMF/UPF. TS 38.300 utilizes different nomenclature as TS 23.501. The NG interface depicts the N2 (CP) and N3 (UP), as well as the N1 messages transported towards the 5GC over the same network connection as N1 messages.

Currently, it is possible to restrict a slice on a per Tracking Area (TA) basis. A TA is usually associated with a geographical region and groups a given number of gNBs. Changing TA allocation impacts radio planning and signaling (e.g. paging), as there are specified procedures to perform when moving between TAs. Simple deployments may be possible to manage via assigning different TAs to given slices, but more heterogeneous slice deployments (e.g. combination of NPNs with public network) would end up severely complicating TA planning and allocation.

Furthermore, as described in TS 23.501, UE Mobility, to support radio resource management in RAN the AMF provides the parameter 'Index to RAT/Frequency Selection Priority' (RFSP Index) to RAN across N2. The RFSP Index is mapped by the RAN to locally defined configuration in order to apply specific Radio Resource Management (RRM) strategies, taking into account any available information in RAN. The RFSP Index is UE-specific and applies to all the Radio Bearers. Two examples of how this parameter may be used by the RAN are, for example: to derive UE specific cell reselection priorities to control idle mode camping and to decide on redirecting active mode UEs to different frequency layers or RATs.

With regard to slicing, in order to enable UE idle mode mobility control and priority-based reselection mechanism considering availability of Network Slices at the network and the Network Slices allowed for a UE, an RFSP is derived as described in clause 5.3.4.3 of TS 23.501, considering also the allowed NSSAI for the UE.

The RFSP Index currently in use is also forwarded from a source to a target RAN node when Xn or N2 is used for intra-NG-RAN handover. RFSP index interpretation is performed by gNB based on the NG-RAN configuration managed by Operations Administration and Maintenance (OAM), whereas the proposal of the present invention, as described later, addresses a signaling-based approach specifying dedicated frequency restrictions per slice ID.

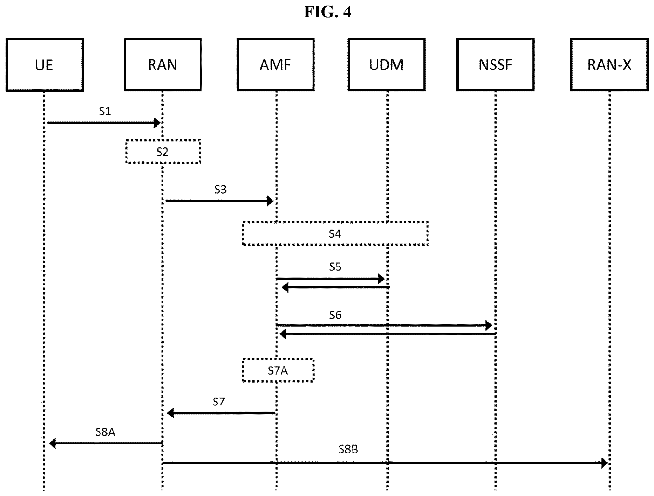

Whenever a UE registers to the network, a registration procedure is performed. A simplified depiction of the registration procedure a UE performs when attaching to the 5GS is illustrated in FIG. 4.

In FIG. 4, step S1, the UE sends a registration request towards the RAN including requested slices (NSSAI, S-NSSAI(s)) and a subscriber identifier (e.g. SUPI, SUCI). In step S2, the RAN selects an AMF to which to send the registration request. In step S3, RAN sends the registration request to the selected AMF. In step S4, the AMF performs authentication/security together with the UDM and other NFs. In step S5, the AMF retrieves subscriber information from UDM or from local configuration at the AMF, including slice selection subscription data (e.g. slices a subscriber is allowed to access identified by their S-NSSAIs).

In step S6, if the AMF determines that slice selection is needed (e.g. it cannot serve the request set of S-NSSAIs), it retrieves slice selection information from the NSSF and either forwards the UE request towards another AMF as per the information retrieved from the NSSF or constructs a response to the RAN containing a redirection to another AMF. The NSSF returns an Authorized Network Slice Information data object. In step 7A, the AMF determines, based on local configuration and/or information retrieved in steps S5, S6, the slice or slices the UE will be allowed to access, i.e. the served slices.

The AMF may assign the UE different slices than the ones it requested. In step S7, the AMF sends a response to the initial registration request containing the identifiers of the served slices. In step S8A, the RAN forwards the registration response to the UE. Alternatively to step S8A, in step S8B, the RAN sends a request to another AMF as per the information received in S7.

In order to perform AMF selection (S2), the RAN is aware of the slice requested by the UE. As per TS 38.300, the NG-RAN selects an AMF based on a Temp ID or NSSAI provided by the UE over RRC. The mechanisms used in the RRC protocol are: 1) for initial attach, the UE may provide NSSAI to support the selection of an AMF; and 2) for subsequent accesses, the UE provides a Temp ID, which is assigned to the UE by the 5GC, to enable the NG-RAN to route the NAS message to the appropriate AMF as long as the Temp ID is valid. The AMF selection based on Temp ID and NSSAI is shown Table 1:

**Table 1**

| **Temp ID** | **NSSAI** | **AMF Selection by NG-RAN** |
|---|---|---|
| Not available or invalid | Not available | One of the default AMFs is selected (NOTE) |
| Not available or invalid | Present | Selects AMF which supports UE requested slices |
| Valid | Not available, or present | Selects AMF per CN identity information in Temp ID |
| NOTE: The set of default AMFs is configured in the NF-RAN nodes via OAM | | |

As specified in TS 29.503, the slice-related subscriber information stored by the UDM contains among other information the following information, as shown in Table 2:

**Table 2**

| **Data type** | **Cardinality** | **Description** |
|---|---|---|
| Default S-NSSAIs | 1..N | List of S-NSSAIs used as default |
| Non-default S-NSSAIs | 1..N | List of non default S-NSSAIs. |
| Additional S-NSSAI Data) | 1..N | A list of additional information related to an S-NSSAI. e.g. whether secondary authorization is required and whether 3GPP/non-3GPP access is supported. |

Given the slice subscription information retrieved from the UDM, the AMF queries the NSSF for Authorized Network Slice Information, which contains among other information the following information, as shown in Table 3:

**Table 3**

| **Attribute name** | **Cardinality** | **Description** |
|---|---|---|
| Allowed S-NSSAIs | 1..N | The allowed S-NSSAI(s) authorized by the NSSF in the serving PLMN per access type. |
| Configured S-NSSAIs | 1..N | The configured S-NSSAI(s) authorized by the NSSF in the serving PLMN. |
| Target AMF set | 0..1 | The target AMF set which shall be constructed from PLMN-ID (i.e. three decimal digits MCC and two or three decimal digits MNC), AMF Region Id (8 bit), and AMF Set Id (10 bit). |
| Candidate AMF list | 1..N | List of candidate AMF(s). |
| Rejected NSSAI in PLMN | 1..N | Rejected NSSAI in the PLMN. |
| Rejected NSSAI in TA | 1..N | Rejected NSSAI in the current Tracking Area (TA). |

For UP steering, the 5GS also defines UE Routing Selection Policies (URSPs), defined in TS 24.526, which allows the network to mandate the UE a set of rules on how to route packets. Each URSP rule contains the following information: length of USRP rule, precedence value of URSP rule, length of traffic descriptor, traffic descriptor, length of route selection descriptor list, and route selection descriptor list.

A typical use case for URSPs is simultaneous transmission of data through a gNB (3GPP access) and a WiFi connection connected via the Internet (non-3GPP access) controlled by the network can so that delay-sensitive traffic (e.g. voice) uses 3GPP access.

The URSP is defined in 3GPP TS 23.503 and is a set of one or more URSP rules, where a URSP rule is composed of: a) a precedence value of the URSP rule identifying the precedence of the URSP rule among all the existing URSP rules; b) a traffic descriptor that specifies the matching criteria, and c) one or more route selection descriptors specifying how to route the matching traffic.

In b), the traffic descriptor may include either match-all traffic description or at least one of the following components: b.i) one or more application identifiers; b.ii) one or more IP 3 tuples as defined in 3GPP TS 23.503 i.e. the destination IP address, the destination port number, and the protocol in use above the IP; b2.iii) one or more non-IP descriptors, i.e. destination information of non-IP traffic; b2.iv) one or more DNNs; b2.v) one or more connection capabilities; and b.vi) one or more domain descriptors, i.e. destination FQDN(s).

In more detail, in c), the one or more route selection descriptors each consisting of a precedence value of the route selection descriptor and either: c.1) one PDU session type and, optionally, one or more of the followings: c.1i) SSC mode, c.1ii) one or more S-NSSAIs, c.1iii) one or more DNNs, c.1iv) Void, c. 1v) preferred access type, c.1vi) multi-access preference, c1-vii. a time window; and c1-viii. location criteria; or c2) non-seamless non-3GPP offload indication.

Samsung et al: "Key issue on 5GC assisted cell selection to access network slice", 3GPP draft; S2-2001467; F-06921 relates to support S-NSSAI aware 5G-AN selection and to the selection by the 5GC of a frequency band that can sufficiently support the network slices that the UE can use.

### Technical problem

One potential advantage of PNI-NPNs is that since subscribers use PLMN credentials (as opposed to SNPNs, where proprietary credentials can be employed), it is technically possible to simultaneously provide access to the customer's private network/services (e.g. by means of a dedicated slice) and to public services (e.g. Internet data services, voice services). However, this is only viable if it can be assured that regulatory requirements are met. With the current means, it is not possible to ensure that regulatory requirements are met in an efficient way.

Further, some jurisdictions have some restrictions on how to provide public services for some specific frequency ranges. For example, in the specific case of Germany, such spectrum range is the 3.7-3.8 GHz frequency range. The current regulatory situation implies that it is not allowed to provide public services on 3.7-3.8 GHz. Similar regulations may exist in other jurisdictions with similar and/or other frequency ranges.

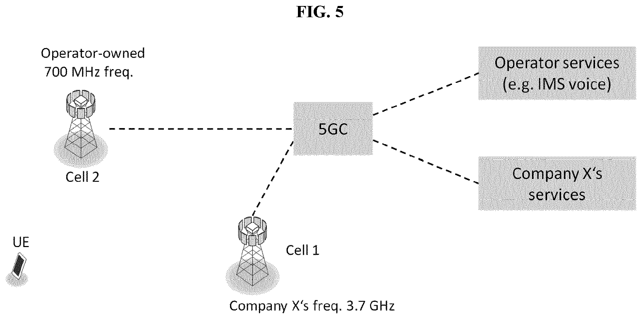

The above-mentioned problem is exemplary illustrated in FIG. 5 which illustrates an exemplary system where an operator managed private spectrum comprises several slices. The system comprises a UE, Cell 1, Cell 2, and a 5GC.

In FIG. 5, the UE is subscribed to S-NSSAIs of: 1) operator voice; and 2) Company X private slice. The Company X's private spectrum is managed by a public operator and a slice has been setup to provide Company X with its own dedicated services. Company X's subscribers are also allowed to use slices offering public services (e.g. voice services, Internet).

There exist mechanisms such as Closed Access Groups (CAG) so that only Company X's subscriber can access the cells using Company X's spectrum (3.7 GHz in the example of FIG. 5). As such, the already-solved problem of restricting cell access to given subscribers is out of scope of the present invention.

In FIG. 5, regulatory constraints dictate that: 1) public services shall not be offered on private spectrum (e.g. Company X's 3.7 GHz frequency); 2) there is no restriction on offering Company X's services on public spectrum; and 3) other cells (e.g. serving other private networks) are present in the area, and radio planning requirements require all the cells to be placed in the same TA, i.e. to serve the same slices. These constrains have the following implications:
The UE must have knowledge of such restrictions so that: it does not request a slice or slice combination (e.g. network attach, PDU session establishment) that may be granted over a frequency it should not use for that service (e.g. allowed: service slices 1+2 over cell 2, service slice 2 over cell 1; e.g. not allowed: service slices 1+2 over cell 1); and it does not request additional radio resources over frequencies it should not use for that service (e.g. not allowed: service slices 1+2 over cell 2, then perform Carrier Aggregation (CA) through cell 1, resulting in traffic from slice 1 being transmitted over 3.7 GHz spectrum).

Further, the RAN must have knowledge of such restrictions so that: it does not perform mobility procedures (e.g. handover) such that the UE ends up in a situation that is not allowed (e.g. not allowed: service slices 1+2 over cell 2, then handover to cell 1).

Still further, the 5GC must have knowledge of such restrictions so that: it does not authorize a slice or slice combination that is not allowed on a given cell (e.g. not allowed: UE requests slices 1+2 over cell 1).

In view of the above problems, the present invention aims at addressing how frequency restrictions can be applied by a 5G System (5GS) so that specific slices and/or combination of slices can only be employed on specific frequencies. It also differentiates the case where either these restrictions apply to both Control Plane (CP) and User Plane (UP) or only to UP.

This object is achieved with the features of the claims.

### Summary of the invention

The above objects are achieved by the features of the independent claims.

Other aspects, features, and advantages will be apparent from the description that follows, including the figures and the claims.

### Brief description of the drawings

In the drawings:
- FIG. 1: illustrates an exemplary 5G System (5GS).
- FIG. 2: illustrates an exemplary 5G Core (5GC) as defined in TS 23.501.
- FIG. 3: illustrates an exemplary Radio Access Network (RAN) architecture.
- FIG. 4: illustrates a simplified view of the registration procedure a User Equipment (UE) performs when attaching to a 5GS according to the prior art.
- FIG.5: illustrates an exemplary system where an operator managed private spectrum comprises several slices.
- FIG. 6: a flow chart of an access control during a UE registration procedure according to an embodiment of the invention.
- FIG. 7: illustrates a flow chart for setting/updating frequency restrictions data in the RAN according to an embodiment of the invention.
- FIG. 8: illustrates a flow chart for setting/updating frequency restrictions data in the UE.
- FIG. 9: a flow chart for setting/updating slice frequency restriction for UP only.

### Detailed description of the invention

According to an embodiment of the invention, there is provided a method for applying frequency restrictions to slices in a 5G System (5GS), wherein the 5GS comprises a User Equipment (UE), a Radio Access Network (RAN), and a 5G Core (5GC), with the UE having a subscription to the 5GS allowing it to use one or more slices. The subscriber is identified by the 5GS via a subscriber identifier such as a SUPI. The 5GC may comprise some of the functional entities as defined in TS 23.501 under the term Network Functions (NFs) as illustrated in FIG. 2, as well as the interfaces between them. The method is based on defining slice frequency restrictions for a given slice and the transmission of this information to the UE and the RAN.

As repository for the slice frequency restrictions for a given a descriptor of one or more slices, e.g. Network Slice Selection Assistance Information (NSSAI), Single-NSSAI (S-NSSAI) or set of S-NSSAIs, this method defines a new functional entity called Slice Frequency Restriction Repository Function (SFRRF). The SFRRF provides an API exposing any combination of the following information:
- Given a descriptor of a single slice such as an S-NSSAI, returns the slice frequency restrictions associated with the given S-NSSAI; and/or
- Given a descriptor of a set of slices such as a NSSAI or set of S-NSSAI, returns the slice frequency restrictions associated with the set of S-NSSAIs composing the NSSAI; and/or
- Given a subscriber identifier such as a SUPI, returns the slice frequency restrictions associated of the S-NSSAIs associated with the subscriber.

In a preferred embodiment, the SFRRF may be implemented as: a standalone NF; combined with NSSF for slice-based information retrieval; or combined with UDM for subscriber-based information retrieval.

### Access control during UE registration procedure

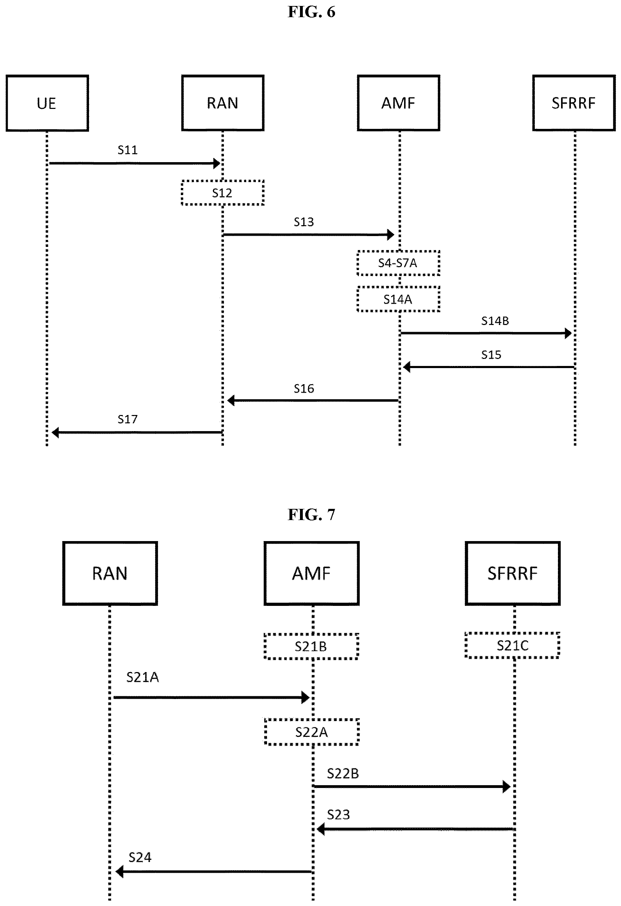

FIG. 6 illustrates a flow chart of an access control during a UE registration procedure according to an embodiment of the invention showing the steps necessary for the method.

In step S11, equivalently to step S1 of FIG. 4, the UE sends a registration request to the RAN, wherein the registration request includes requested slice(s), e.g. NSSAI, S-NSSAI(s), cell ID and/or subscriber identifier.

In step S12, the RAN selects an AMF to which to send the registration request, equivalently to step S2.

In step S13, equivalently to step S3, the RAN sends the registration request to the selected AMF including the requested NSSAI, S-NSSAI(s) and/or subscriber identifier.

Steps S4-S7A, are part of the normal registration procedure and shown in FIG. 4.

In step S14A, the AMF determines the slice frequency restriction information that needs to be retrieved, e.g.
- in case requested slice information is missing, use a default NSSAI or S-NSSAI for the given subscriber, optionally retrieving subscriber information from other NFs if needed,
- in case the served slices determined in step S7A are not the same the subscriber requested, use the served slices for the request,
- use the slices and/or subscriber identifier received in S13.

In step S14B, based on the query information determined in S14A, the AMF sends to the SFRRF a message requesting slice frequency restriction information to the SFRRF for the relevant NSSAI, S-NSSAI(s) and/or subscriber identifier(s).

In step S15, based on the request parameters received in step S14B, the SFRRF sends slice frequency restriction information to the AMF

In step S16, the AMF sends a registration response, i.e. in response to the registration request, to the RAN, i.e. equivalent to S7 with the addition of optionally including slice frequency restriction information for the slices assigned to the UE.

In step S17, the RAN forwards the registration response to the UE, i.e. equivalent to S8 with the addition of optionally including slice frequency restriction information for the slices assigned to the UE.

### Set/update the slice frequency restriction data in RAN

According to an embodiment of the invention, in order to ensure that RAN has up-to-date information on slice frequency restrictions, the RAN can request to and/or receive from the 5GC via the AMF updated slice frequency restrictions for one or more S-NSSAIs. Since the RAN is aware of what slice each PDU session from a UE belongs to, it can apply this information during mobility procedures.

FIG. 7 illustrates a flow chart for setting/updating frequency restrictions data in the RAN. The setting and updating of slice frequency restrictions in the RAN can be triggered by:
- RAN, e.g. a check for slice frequency restriction information triggered by UE mobility or a regular timer triggering an update of the slice frequency information; or
- AMF, e.g. a new RAN node connection setup with the AMF, the AMF has been reconfigured to serve a different set of slices or a timer is configured to regularly update the information; or
- SFRRF, e.g. a change in the slice frequency restriction information for a given NSSAI, S-NSSAI or subscriber is detected, a new slice has been created or an existing slice has been removed. If a AMF is subscribed to changes in the slice frequency restriction information for given slices, the SFRRF will notify said AMF when a change occurs matching the subscription criteria.

If RAN triggers the flow, in step S21A, the RAN sends a request for slice frequency restriction information for a given NSSAI or subscriber to the AMF including NSSAI, S-NSSAI(s) and/or subscriber identifier.

Alternatively, the AMF triggers the updating of slice frequency restrictions in the RAN in step S21B.

Alternatively, the SFRRF triggers the updating of slice frequency restrictions for a given slice, slices or subscriber identifier(s) in the RAN in step S21C.

If steps S21A or S21B are performed, steps S22A and S22B are performed.

In step S22A, the AMF determines the slice frequency restriction information that needs to be retrieved based on the information received in S21A or the trigger information from S21B to construct the request that needs to be sent towards the SFRRF, e.g.
- in case requested slice information is missing, use a default NSSAI or S-NSSAI for the given subscriber, optionally retrieving subscriber information from other NFs if needed,
- in case the served slices are not the same the subscriber requested, use the served slices for the request,
- in case a new cell opens a connection with the AMF, the AMF can then push slice restriction information to said cell,
- in case the AMF has a periodic trigger to update slice frequency restriction information for a given cell or set of cells,
- in case the AMF has a periodic trigger to update slice frequency restriction information for a given set of slices, the trigger information includes a slice description, e.g. NSSAI, S-NSSA or set of S-NSSAIs,
- the AMF may also be configured to use the information received in S21A or trigger information from S21B without further checks.

In step S22B, the AMF sends to the SFRRF a message requesting slice frequency restriction information to the SFRRF for the relevant NSSAI, S-NSSAI(s) and/or subscriber identifier(s) determined in step S22A.

In step S23, the SFRRF sends to the AMF a message comprising information the slice frequency restriction information as per the parameters in S22B or S21C.

In step S24, the AMF forwards to the RAN the message comprising information of the slice frequency restriction information.

### Set/update frequency restriction data in UE

According to an embodiment of the invention, in order ensure that the UE has up-to-date information on slice frequency restrictions, the 5GC sets/updates the slice frequency restrictions that the UE stores. Since in this case this information is subscriber-specific, it is typically sent encrypted to the UE and as such not accessible to RAN.

The setting and updating of slice frequency restrictions in the UE can be triggered by
- UE, e.g. after a successful UE registration; or
- AMF, e.g. after a successful UE registration; or
- SFRRF, e.g. a change in the slice frequency restriction information for a given NSSAI, S-NSSAI or subscriber is detected, a new slice has been created or an existing slice has been removed. In this case, subscribed NFs (e.g. AMFs monitoring specific S-NSSAIs) can get notified and push the changes to related UEs.

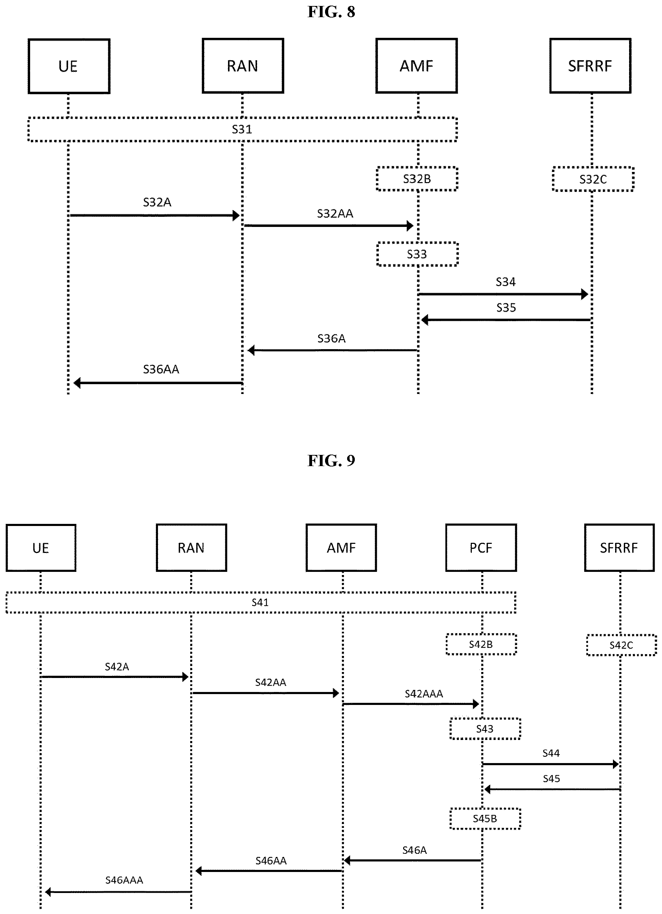

FIG. 8 illustrates a flow chart for setting/updating slice frequency restriction data in the UE.

In step S31, the UE registers with the 5GS, wherein the registration request includes a requested slice or slices and the 5GS successfully confirms the registration. In a preferred embodiment, step S31 registering with the 5GS and receiving the confirmation of the successful registration from the 5GS may comprise performing all the steps S1 to S8 as explained above for FIG. 4.

If the UE triggers the flow, in step S32A, the UE sends a request for slice frequency restriction information to the AMF via the RAN, which forwards the message (step S32AA). The request may include NSSAI, S-NSSAI(s) and/or the UEs subscription identifier.

Alternatively, the AMF triggers the sending of slice frequency restrictions for the UE in step S32B

Alternatively, the SFRRF triggers the sending of slice frequency restrictions for the UE in step S32C and triggers a notification to subscribed AMFs. If step S32C is performed, steps S33 and S34 are not performed.

In step S33, the AMF determines the slice frequency restriction information that needs to be retrieved based on the information received in S32AA or the trigger information from S32B to construct the request that needs to be sent towards the SFRRF, e.g.
- maps UE identifier to served slices or slices the subscriber is allowed to access,
- the AMF may also be configured to use the information received in S32AA or trigger information from S32B without further checks.

In step S34, the AMF sends a message to the SFRRF requesting slice frequency restriction information to the SFRRF for the NSSAI, S-NSSAI(s) and/or subscriber identifier determined in step S33.

In step S35, the SFRRF sends to the AMF a message comprising information the slice frequency restriction information as per the parameters in S34 or S32C.

In step S36A, the AMF sends a message to the UE via the RAN, which forwards the message (step S36AA) including the slice frequency restriction information.

### Set/update slice frequency restriction for UP only via URSPs

TS 23.503 and 24.526 specify UE Route Selection Policies (URSPs), which allow the 5GC to define rules in a UE on how to route certain traffic.

According to an embodiment of the invention, there is provided a method that extends the URSP route selection descriptor list with frequency restriction information data.

FIG. 9 illustrates a flow chart for setting/updating slice frequency restriction for UP only. The PCF comprises a set of UE Routing Selection Policies (USRP) rules that allow the 5GS to mandate the UE a set of rules on how to route packets. As considered in this method, each URSP rule contains at least the following information: precedence value of URSP rule, a traffic description, and at least a route selection descriptor containing slice frequency selection restrictions for a given NSSAI or S-NSSAI(s).

The setting and updating of URSPs containing slice frequency restrictions in the UE can be triggered by
- UE, e.g. after a successful UE registration; or
- PCF, e.g. after a successful UE registration or during/after a PDU session establishment; or
- SFRRF, e.g. a change in the slice frequency restriction information for a given NSSAI, S-NSSAI or subscriber is detected, a new slice has been created or an existing slice has been removed. In this case, subscribed NFs (e.g. PCFs monitoring specific S-NSSAIs or subscriber identifiers) can get notified and push the changes to related UEs.

If the UE triggers the flow, in step S42A, the UE sends a request to the PCF via the RAN, which forwards the message to the AMF (step S42AA). The AMF then forwards the message to the PCF (step S42AAA).

Alternatively, the PCF triggers the sending of slice frequency restrictions for the UE in step S42B.

Alternatively, the SFRRF triggers the sending of slice frequency restrictions for the UE in step S42C and triggers a notification to subscribed PCFs. If step S42C is performed, steps S43 and S44 are not performed.

In step S43, the PCF determines the slice frequency restriction information that needs to be retrieved based on the information received in S42AAA or the trigger information from S42B to construct the request that needs to be sent towards the SFRRF, e.g.
- maps UE identifier to served slices or slices the subscriber is allowed to access
- the PCF may also be configured to use the information received in S42AAA or trigger information from S42B without further checks

In step S44, the PCF sends a message to the SFRRF requesting slice frequency restriction information to the SFRRF for the NSSAI, S-NSSAI(s) and/or subscriber identifier determined in step S43.

In step S45, the SFRRF sends to the PCF a message comprising information the slice frequency restriction information as per the parameters in S44 or S42C.

In step S45B, the PCF creates one or more URSP rules instructing the UE to route traffic according to the slice frequency restriction retrieved in step S45.

In step S46A, the PCF sends a message to the UE including created URSPs via the AMF. The AMF forwards the message to the RAN (step S46AA), which subsequently forwards the message to the UE (step S46AAA).

### Content of slice frequency restriction information

According to a preferred embodiment, the slice frequency restriction information as referred in any of the above embodiments and/or preferred embodiments may contain, for a given subscriber identifier or slice descriptor, e.g. S-NSSAI or NSSAI, the following information illustrated in Table 5:

**Table 5: Slice frequency restriction information**

| **Data type** | **Cardinality** | **Description** |
|---|---|---|
| Not allowed frequencies | 0..N | List of frequencies or frequency ranges this slice or slice combination is not allowed to use |
| Allowed frequencies | 0..N | List of frequencies or frequency ranges this slice or slice combination is allowed to use |
| Allow for control plane | 0...1 | Whether the not allowed frequency restrictions apply to CP and UP or to UP only, i.e. whether the applied method is non-URSP-based or URSP-based respectively |
| Subscriber identifier | 0... N | The subscriber identifier or identifiers where this frequency restriction applies. If not present, valid for all subscribers |
| Cell identifier | 0... N | The cell identifier or identifiers where this frequency restriction applies. If not present, valid for all subscribers |
| Network identifier | 0... N | The network identifier indicates where this restriction is valid. If not present, valid for all networks. Examples of network identifier would be a PLMN ID (e.g. 262 01), or a combination of PLMN and Network Identifier (NID) of a private network (e.g. PLMN 999 99, NID 123) |

The slice frequency restriction information contains:
- At least one not allowed frequency/frequency range or at least one allowed frequency/frequency range,
- If the system supports both non-URSP-based and URSP-based slice frequency restriction, the slice frequency restriction information contains the allow for control plane information.

The querying for slice frequency restriction information in the SFRRF may comprise one or a combination of the following parameters: S-NSSAI, NSSAI, Subscriber identity (e.g. SUPI), Cell ID.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

Furthermore, in the claims the word "comprising" does not exclude other elements or steps, and the indefinite article "a" or "an" does not exclude a plurality. A single unit may fulfill the functions of several features recited in the claims. The terms "essentially", "about", "approximately" and the like in connection with an attribute or a value particularly also define exactly the attribute or exactly the value, respectively. Any reference signs in the claims should not be construed as limiting the scope.

## Claims

1. A method for applying frequency restrictions to slices in a 5G System, 5GS, the 5GS comprising a User Equipment, UE; a Radio Access Network, RAN, composed of cells, each uniquely identifiable within the 5GS via a cell identifier, cell ID; and a 5G Core, 5GC; wherein the 5GC comprises at least: a Policy Control Function, PCF, one or more Access and Mobility Function, AMF, and a functional entity; and wherein the UE and the 5GC contain subscription information of a user, uniquely identifiable within the 5GS via a subscriber identifier, ID, which allows said user to use the UE to access one or more slices in the 5GS, the method comprising:
storing, by the functional entity, a set of slice frequency restrictions information associated with slice selection information, cell ID, and/or with a subscriber ID, wherein the set of slice frequency restrictions information comprises User Plane, UP, traffic restrictions, wherein slice selection information is comprised of: Network Slice Selection Assistance Information, NSSAI; a Single-NSSAI, S-NSSAI; a set of S-NSSAI; or one or more identifiers, each uniquely identifying a slice within the 5GS, and wherein the PCF comprises a set of UE Route Selection Policies, URSPs, rules, wherein each URSP rule comprises at least the following parameters: precedence value of URSP rule, a traffic description, and at least a route selection descriptor containing slice frequency selection restrictions for a given slice selection information;
upon receiving, by the UE, a confirmation indicating that a registration to the 5GS has been performed successfully (S41):
triggering (S42A), by the UE, an update of URSPs containing slice frequency restrictions information by sending an update request from the UE to the PCF, via the RAN (S42AA) and AMF (S42AAA), for slice frequency restrictions information, or
triggering (S42B), by the PCF, an update of URSPs containing slice frequency restrictions information, based on PCF trigger information, by sending an update request for slice frequency restrictions information to the functional entity, or
triggering (S42C), by the functional entity, an update of URSPs containing slice frequency restrictions information by sending a notification to subscribed PCFs, based on functional entity trigger information;
if the update has been triggered by the UE or the PCF: determining (S43), at the PCF, slice frequency restrictions information that needs to be retrieved based on the information provided by the UE or the PCF trigger information, and sending (S44), from the PCF to the functional entity, a request for the slice frequency restrictions information;
upon receiving a request from the UE or the PCF, the request comprising one or a combination of request parameters: slice selection information, cell ID, and/or a subscriber ID; sending (S45), from the functional entity to the PCF, a message comprising the slice frequency restrictions information matching one or more of the request parameters;
creating (S45B), by the PCF, one or more URSP rules instructing the UE to route traffic according to the slice frequency restrictions received from the functional entity;
sending (S46A), from the PCF to the UE, a message including the generated URSP information via the AMF and the RAN (S46 AA, S46AAA).

2. The method of claim 1, wherein the 5GC further comprises a Unified Data Management, UDM, Network Slice Selection Function, NSSF, the method further comprising:
sending (S11), from the UE to the RAN, a registration request, the registration request comprising one or a combination of registration parameters: requested slice selection information, cell ID and/or a subscriber ID;
selecting (S12), at the RAN, an AMF based on the registration parameters;
sending (S13), from the RAN to the selected AMF, the registration request including the requested slice selection information, cell ID, and/or subscriber ID;
performing (S4), at the selected AMF, authentication/security together with the UDM;
retrieving (S5), at the selected AMF, from the UDM or from local configuration at the AMF, subscriber information including slice selection subscription data, wherein the slice selection subscription data indicates slice or slices a subscriber is allowed to access identified by slice selection information;
checking, at the selected AMF, whether slice selection is needed and, if slice selection is needed, retrieving (S6), from the NSSF, UDM or from local configuration at the AMF, slice selection information, and based on the information retrieved from local configuration, the NSSF, UDM and/or the received requested slice selection information, determining (S7A) a served slice or served slices that the UE will be allowed to access by the 5GS, wherein the served slice or slices are identified by slice selection information;
determining (S14A), at the AMF, slice frequency restrictions information that needs to be retrieved based on the slice selection information of the served slices and creating a request based on the determined slice frequency restrictions information;
sending (S14B), by the AMF to the functional entity, the request for slice frequency restrictions information;
sending (S15), from the functional entity to the AMF, a message comprising the requested slice frequency restrictions information;
sending (S16), from the AMF to the RAN, a registration response including the slice frequency restrictions information for the served slice or served slices served to the UE; and
forwarding (S17), from the RAN to the UE, the registration response.

3. The method of claim 2, wherein the determining (S14A), at the AMF, of slice frequency restrictions information based on the slice selection information comprises:
in case requested slice selection information is missing, creating a request for slice frequency restrictions information using default slice selection information and, if needed, retrieving subscriber information from the 5GC; or
in case the served slices (S4) are not the same as the ones contained in the requested slice selection information (S11), creating a request for slice frequency restrictions information using the served slices request; or
creating a request for slice frequency restrictions information using the requested slice selection information, cell ID and/or subscriber ID, as received with the registration request from the RAN to the selected AMF

4. The method of any one of claims 1 to 3, comprising:
triggering and sending (S21A), from the RAN to the AMF, a request for slice frequency restrictions information for a given slice or subscriber, the request including slice selection information, cell ID and/or subscriber ID, or
triggering (S21B), at the AMF, an update of slice frequency restrictions information based on AMF trigger information, or
triggering (S21C), at the functional entity, an update of slice frequency restrictions information based on functional entity trigger information;
if the update request for slice frequency restrictions information has been triggered by the RAN or the AMF, determining (S22A), at the AMF, slice frequency restrictions information that needs to be retrieved based on the information provided by the RAN or the AMF trigger information, creating a request for slice frequency restrictions information based on the determined slice frequency restrictions information, and sending (S22B), from the AMF to the functional entity, the request for slice frequency restrictions information;
sending (S23), from the functional entity to the AMF, a message comprising the requested slice frequency restrictions information;
forwarding (S24), from the AMF to the RAN, the message comprising the slice frequency restrictions information.

5. The method of claim 4, wherein if the update request for slice frequency restrictions information has been triggered by the RAN or the AMF, the determining (S22A) of slice frequency restrictions information that needs to be retrieved based on the information provided by the RAN, comprises:
in case requested slice selection information is missing, creating a request for slice frequency restrictions information using a default, configured slice selection information for the given subscriber, and, if needed, retrieving subscriber information from the 5GC,
in case the AMF has a periodic trigger to update slice frequency restrictions information for a given slice or set of slices identified by slice selection information, creating a request for slice frequency restrictions information using slice selection information,
in case the AMF has a periodic trigger to update slice frequency restrictions information for a given cell identified by cell ID, creating a request for slice frequency restrictions information using cell ID,
in case the AMF detects a new cell identified by cell ID connecting to the AMF, creating a request for slice frequency restrictions information using cell ID, and/or
in case the AMF is configured to use the request for slice frequency restrictions information that the RAN sent (S21A) to the AMF, creating a request for slice frequency restrictions information using slice selection information received from RAN.

6. The method of any one of claims 1 to 5, the method comprising:
the UE sending a registration request to the 5GC via the RAN, wherein the registration request comprises one or a combination of request parameters: slice selection information, cell ID, and/or a subscriber ID, and receiving, at the UE, a confirmation indicating that the registration has been performed successfully (S31);
triggering and sending (S32A), from the UE to the AMF, via the RAN (S32AA), an update for slice frequency restrictions information associated with slice selection information or subscriber ID, or
triggering (S32B), by the AMF, a request for slice frequency restrictions information based on AMF trigger information, or
triggering (S32C), by the functional entity, an update of slice frequency restrictions information based on functional entity trigger information;
if the request for slice frequency restrictions information has been triggered by the UE or the AMF: determining (S33), at the AMF, slice frequency restrictions information that needs to be retrieved based on the information provided by the UE or the AMF trigger information, creating a request for slice frequency restrictions information based on the determined slice frequency restrictions information, and sending (S34), from the AMF to the functional entity, the request for slice frequency restrictions information;
sending (S35), from the functional entity to the AMF, a message comprising the requested slice frequency restrictions information;
sending (S36A), from the AMF to the UE, via the RAN (S36AA), a message comprising the slice frequency restrictions information.

7. The method of any one of claims 1 to 6, wherein the functional entity supports the subscription to changes to specific slice frequency restrictions information by 5GS components and subsequent notification of said changes towards the subscribed 5GS components.

8. A 5G System, 5GS, configured to apply frequency restrictions to slices in the 5GS, the 5GS comprising a User Equipment, UE; a Radio Access Network, RAN, composed of cells, each uniquely identifiable within the 5GS via a cell identifier, cell ID; and a 5G Core, 5GC; wherein the 5GC comprises at least: a Policy Control Function, PCF, one or more Access and Mobility Function, AMF, and a functional entity; and wherein the UE and the 5GC contain subscription information of a user, uniquely identifiable within the 5GS via a subscriber identifier, ID, which allows said user to use the UE to access one or more slices in the 5GS; wherein:
the functional entity is configured to store a set of slice frequency restrictions information associated with slice selection information, cell ID, and/or with a subscriber ID, wherein the set of slice frequency restrictions information comprises User Plane, UP, traffic restrictions, wherein slice selection information is comprised of: Network Slice Selection Assistance Information, NSSAI; a Single-NSSAI, S-NSSAI; a set of S-NSSAI; or one or more identifiers, each uniquely identifying a slice within the 5GS, and wherein the PCF comprises a set of UE Route Selection Policies, URSPs, rules, wherein each URSP rule comprises at least the following parameters: precedence value of URSP rule, a traffic description, and at least a route selection descriptor containing slice frequency selection restrictions for a given slice selection information;
upon receiving, by the UE, a confirmation indicating that a registration to the 5GS has been performed successfully:
the UE is configured to trigger an update of URSPs containing slice frequency restrictions information by sending an update request from the UE to the PCF, via the RAN and AMF, for slice frequency restrictions information, or
the PCF is configured to trigger an update of URSPs containing slice frequency restrictions information, based on PCF trigger information, by sending an update request for slice frequency restrictions information to the functional entity, or
the functional entity is configured to trigger an update of URSPs containing slice frequency restrictions information by sending a notification to subscribed PCFs, based on functional entity trigger information;
if the update has been triggered by the UE or the PCF, the PCF is configured to: determine slice frequency restrictions information that needs to be retrieved based on the information provided by the UE or the PCF trigger information, and send, to the functional entity, a request for the slice frequency restrictions information;
upon receiving a request from the UE or the PCF, the request comprising one or a combination of request parameters: slice selection information, cell ID, and/or a subscriber ID, the functional entity is configured to send a message to the PCF comprising the slice frequency restrictions information matching one or more of the request parameters;
the PCF is configured to create one or more URSP rules instructing the UE to route traffic according to the slice frequency restrictions received from the functional entity;
the PCF is configured to send to the UE, a message including the generated URSP information via the AMF and the RAN.

9. The 5GS of claim 8, wherein the 5GC further comprises a Unified Data Management, UDM, Network Slice Selection Function, NSSF, wherein:
the UE is configured to send to the RAN a registration request, the registration request comprising one or a combination of registration parameters: requested slice selection information, cell ID and/or a subscriber ID;
the RAN is configured to select an AMF based on the registration parameters;
the RAN is configured to send, to the selected AMF, the registration request including the requested slice selection information, cell ID, and/or subscriber ID;
the selected AMF is configured to perform authentication/security together with the UDM;
the selected AMF is configured to retrieve from the UDM or from local configuration at the AMF, subscriber information including slice selection subscription data, wherein the slice selection subscription data indicates slice or slices a subscriber is allowed to access identified by slice selection information;
the selected AMF is configured to check whether slice selection is needed and, if slice selection is needed, is configured to retrieve from the NSSF, UDM or from local configuration at the AMF, slice selection information, and based on the information retrieved from the NSSF and/or UDM, is configured to determine a served slice or served slices that the UE will be allowed to access by the 5GS, wherein the served slice or slices are identified by slice selection information;
the AMF is configured to determine slice frequency restrictions information that needs to be retrieved based on the slice selection information of the served slices and to create a request based on the determined slice frequency restrictions information;
the AMF is configured to send, to the functional entity, the request for slice frequency restrictions information;
the functional entity is configured to send, to the AMF, a message comprising the requested slice frequency restrictions information;
the AMF is configured to send, to the RAN, a registration response including the slice frequency restrictions information for the served slice or served slices served to the UE; and the RAN is configured to forward to the UE the registration response.

10. The 5GS of claim 9, the determination, at the AMF, of slice frequency restrictions information based on the slice selection information comprises:
in case requested slice selection information is missing, the AMF is configured to create a request for slice frequency restrictions information using default slice selection information and, if needed, is configured to retrieve subscriber information from the 5GC; or
in case the served slices are not the same as the ones contained in the requested slice selection information, the AMF is configured to create a request for slice frequency restrictions information using the served slices request; or
the AMF is configured to create a request for slice frequency restrictions information using the requested slice selection information, cell ID and/or subscriber ID, as received with the registration request from the RAN to the selected AMF

11. The 5GS of any one of claims 8 to 10, wherein:
the RAN is configured to trigger and to send, to the AMF, a request for slice frequency restrictions information for a given slice or subscriber, the request including slice selection information, cell ID and/or subscriber ID, or the AMF is configured to trigger an update of slice frequency restrictions information based on AMF trigger information, or the functional entity is configured to trigger an update of slice frequency restrictions information based on functional entity trigger information;
if the update request for slice frequency restrictions information has been triggered by the RAN or the AMF, the AMF is configured to: determine slice frequency restrictions information that needs to be retrieved based on the information provided by the RAN or the AMF trigger information, create a request for slice frequency restrictions information based on the determined slice frequency restrictions information, and send to the functional entity the request for slice frequency restrictions information;
the functional entity is configured to send to the AMF a message comprising the requested slice frequency restrictions information and the AMF is configured to forward to the RAN the message comprising the slice frequency restrictions information,
wherein if the update request for slice frequency restrictions information has been triggered by the RAN or the AMF, the determination of slice frequency restrictions information that needs to be retrieved based on the information provided by the RAN, comprises:
in case requested slice selection information is missing, the AMF is configured to create a request for slice frequency restrictions information using a default, configured slice selection information for the given subscriber, and, if needed, to retrieve subscriber information from the 5GC,
in case the served slices are not the same the subscriber requested, the AMF is configured to create a request for slice frequency restrictions information using the served slices for the request,
in case the AMF has a periodic trigger to update slice frequency restrictions information for a given slice or set of slices identified by slice selection information, the AMF is configured to create a request for slice frequency restrictions information using slice selection information, and/or
in case the AMF is configured to use the request for slice frequency restrictions information that the RAN sent to the AMF, the AMF is configured to create a request for slice frequency restrictions information using slice selection information received from RAN.

12. The 5GS of any one of claims 8 to 11, wherein:
the UE is configured to send a registration request to the 5GC via the RAN, wherein the registration request comprises one or a combination of request parameters: slice selection information, cell ID, and/or a subscriber ID, and to receive, at the UE, a confirmation indicating that the registration has been performed successfully;
the UE is configured to trigger and to send, to the AMF, via the RAN, an update for slice frequency restrictions information associated with slice selection information, or
the AMF is configured to trigger a request for slice frequency restrictions information based on AMF trigger information, or
the functional entity is configured to trigger an update of slice frequency restrictions information based on functional entity trigger information;
if the request for slice frequency restrictions information has been triggered by the UE or the AMF: the AMF is configured to: determine slice frequency restrictions information that needs to be retrieved based on the information provided by the UE or the AMF trigger information, create a request for slice frequency restrictions information based on the determined slice frequency restrictions information, and send, to the functional entity, the request for slice frequency restrictions information;
the functional entity is configured to send to the AMF, a message comprising the requested slice frequency restrictions information;
the AMF is configured to send to the UE, via the RAN, a message comprising the slice frequency restrictions information.

13. The method of any one of claims 1 to 7 or the 5GS of any one of claims 8 to 12, wherein the slice frequency restrictions information comprises, for a given slice selection information, cell ID or subscriber ID, any of the following information: not allowed frequencies, allowed frequencies, allow frequencies for control plane, cell ID, subscriber ID, and network identifier,
wherein the not allowed frequencies indicates a list of frequencies or frequency ranges the given slices indicated by the slice selection information are not allowed to use,
wherein the allowed frequencies indicate a list of frequencies or frequency ranges the given slices indicated by the slice selection information are allowed to use,
wherein in a 5GS supporting both Control Plane, CP, and User Plane, UP or to UP only slice frequency restrictions, the allow frequencies for control plane indicates whether the not allowed frequency restrictions apply to CP and UP or to UP only, and in the case they only apply to UP, URSPs rules are used for setting slice frequency restrictions in the UE;
wherein in a 5GS supporting only CP and UP slice frequency restrictions, the allow frequencies for control plane indicates parameter is not required and URSPs rules are not used for setting slice frequency restrictions in the UE;
wherein in a 5GS supporting only UP slice frequency restrictions, the allow frequencies for control plane indicates parameter is not required and URSPs rules are used for setting slice frequency restrictions in the UE;
wherein the subscriber identifier contains one or more subscriber identifiers indicating for what subscriber or subscribers this restriction is valid, and in the case that the subscriber identifier information is missing, the restriction does not refer to any subscriber in particular and may be valid for all subscribers;
wherein the cell identifier contains one or more cell identifiers indicating for what cell or cells this restriction is valid, and in the case that the cell identifier information is missing, the restriction does not refer to any cell in particular and may be valid for all cells; and/or
wherein the network identifier contains one or more network identifiers indicating in what network or networks this restriction is valid, and in the case that the network identifier information is missing, the restriction the restriction does not refer to any network in particular and may be valid to any network.

## Patentansprüche

1. Verfahren zum Anwenden von Frequenzbeschränkungen auf Slices in einem 5G-System, 5GS, wobei das 5GS eine Benutzereinrichtung, UE; ein Funkzugangsnetzwerk, RAN, das aus Zellen besteht, die jeweils innerhalb des 5GS über eine Zellenkennung, Zellen-ID, eindeutig identifizierbar sind; und einen 5G-Kern, 5GC, aufweist; wobei der 5GC mindestens aufweist: eine Richtlinien-Steuerfunktion, PCF, eine oder mehrere einer Zugriffs- und Mobilitätsfunktionen, AMF, und einer Funktionseinheit; und wobei die UE und der 5GC Subskriptionsinformationen eines Benutzers enthalten, der innerhalb des 5GS über eine Teilnehmerkennung, ID, eindeutig identifizierbar ist, die es dem Benutzer ermöglicht, die UE zu verwenden, um auf einen oder mehrere Slices im 5GS zuzugreifen, wobei das Verfahren aufweist:
Speichern durch die Funktionseinheit eines Satzes von Slice-Frequenzbeschränkungs-Informationen, die mit Slice-Auswahlinformationen, einer Zellen-ID und/oder mit einer Teilnehmer-ID verknüpft sind, wobei der Satz der Slice-Frequenzbeschränkungs-Informationen Benutzerebenen-, UP, Verkehrsbeschränkungen aufweist, wobei die Slice-Auswahlinformationen bestehen aus: Netzwerk-Slice-Auswahl-Unterstützungsinformationen, NSSAI; Einzel-NSSAI, S-NSSAI; einem Satz von S-NSSAI; oder einer oder mehreren Kennungen, die jeweils einen Slice innerhalb des 5GS eindeutig identifizieren, und
wobei die PCF einen Satz von UE-Routenauswahlrichtlinien-, URSPs, Regeln aufweist,
wobei jede URSP-Regel mindestens die folgenden Parameter aufweist: einen Vorrangwert der URSP-Regel, eine Verkehrsbeschreibung und mindestens einen Routenauswahl-Deskriptor, der Slice-Frequenz-Auswahlbeschränkungen für gegebene Slice-Auswahlinformationen enthält;
beim Empfangen einer Bestätigung durch die UE, die angibt, dass eine Registrierung am 5GS erfolgreich durchgeführt worden ist (S41):
Triggern (S42A) durch die UE einer Aktualisierung der URSPs, die Slice-Frequenzbeschränkungs-Informationen enthalten, durch Senden einer Aktualisierungsanforderung von der UE an die PCF über das RAN (S42AA) und die AMF (S42AAA) von Slice-Frequenzbeschränkungs-Informationen, oder
Triggern (S42B) durch die PCF einer Aktualisierung der URSPs, die Slice-Frequenzbeschränkungs-Informationen enthalten, basierend auf PCF-Triggerinformationen durch Senden einer Aktualisierungsanforderung von Slice-Frequenzbeschränkungs-Informationen an die Funktionseinheit, oder
Triggern (S42C) durch die Funktionseinheit einer Aktualisierung der URSPs, die Slice-Frequenzbeschränkungs-Informationen enthalten, durch Senden einer Benachrichtigung an subskribierte PCFs basierend auf Funktionseinheits-Triggerinformationen;
wenn die Aktualisierung durch die UE oder die PCF getriggert worden ist: Bestimmen (S43), an der PCF von Slice-Frequenzbeschränkungs-Informationen, die abgerufen werden müssen, basierend auf den Informationen, die durch das UE oder die PCF-Triggerinformationen bereitgestellt werden, und Senden (S44) von der PCF an die Funktionseinheit einer Anforderung für die Slice-Frequenzbeschränkungs-Informationen;
beim Empfangen einer Anforderung von der UE oder der PCF, wobei die Anforderung einen oder eine Kombination von Anforderungsparametern aufweist: Slice-Auswahlinformationen, eine Zellen-ID, und/oder eine Teilnehmer-ID; Senden (S45) von der Funktionseinheit an die PCF einer Nachricht, die die Slice-Frequenzbeschränkungs-Informationen aufweist, die mit einem oder mehrere der Anforderungsparameter übereinstimmen;
Erzeugen (S45B) durch die PCF einer oder mehrerer URSP-Regeln, die das UE anweisen, Verkehr gemäß den von der Funktionseinheit empfangenen Slice-Frequenzbeschränkungen zu leiten;
Senden (S46A) von der PCF an die UE einer Nachricht, die die erzeugten URSP-Informationen enthalten, über die AMF und das RAN (S46AA, S46AAA).

2. Verfahren nach Anspruch 1, wobei der 5GC ferner eine einheitliche Datenverwaltungs-, UDM, Netzwerk-Slice-Auswahlfunktion, NSSF, aufweist, wobei das Verfahren ferner aufweist:
Senden (S11), von der UE an das RAN einer Registrierungsanforderung, wobei die Registrierungsanforderung einen oder eine Kombination von Registrierungsparametern aufweist: angeforderte Slice-Auswahlinformationen, eine Zellen-ID und/oder eine Teilnehmer-ID;
Auswählen (S12) am RAN einer AMF basierend auf den Registrierungsparametern; Senden (S13) vom RAN an die ausgewählte AMF der Registrierungsanforderung, die die angeforderten Slice-Auswahlinformationen, die Zellen-ID und/oder Teilnehmer-ID enthält;
Durchführen (S4) an der ausgewählten AMF einer Authentifizierung/Sicherheit zusammen mit der UDM;
Abrufen (S5) an der ausgewählten AMF von der UDM oder von der lokalen Konfiguration an der AMF von Teilnehmerinformationen, die Slice-Auswahl-Subskriptionsdaten enthalten, wobei die Slice-Auswahl-Subskriptionsdaten einen Slice oder Slices angeben, auf die ein Teilnehmer zugreifen darf, die durch die Slice-Auswahlinformationen identifiziert werden;
Prüfen an der ausgewählten AMF, ob eine Slice-Auswahl benötigt wird, und wenn eine Slice-Auswahl benötigt wird, Abrufen (S6) von der NSSF, UDM oder von der lokalen Konfiguration an der AMF von Slice-Auswahlinformationen und basierend auf den Informationen, die von der lokalen Konfiguration, der NSSF, UDM und/oder den empfangenen angeforderten Slice-Auswahlinformationen abgerufen werden, Bestimmen (S7A) eines bedienten Slice oder bedienter Slices, auf die das UE durch das 5GS zugreifen darf, wobei der bediente Slice oder die bedienten Slices durch die Slice-Auswahlinformationen identifiziert werden;
Bestimmen (S14A) an der AMF von Slice-Frequenzbeschränkungs-Informationen, die abgerufen werden müssen, basierend auf den Slice-Auswahlinformationen der bedienten Slices, und Erzeugen einer Anforderung basierend auf den bestimmten Slice-Frequenzbeschränkungs-Informationen;
Senden (S14B) durch die AMF an die Funktionseinheit der Anforderung von Slice-Frequenzbeschränkungs-Informationen;
Senden (S15) von der Funktionseinheit an die AMF einer Nachricht, die die angeforderten Slice-Frequenzbeschränkungs-Informationen aufweist;
Senden (S16) von der AMF an das RAN einer Registrierungsantwort, die Slice-Frequenzbeschränkungs-Informationen für den bedienten Slice oder die bedienten Slices enthält, die für die UE bedient werden; und
Weiterleiten (S17) der Registrierungsantwort vom RAN an die UE.

3. Verfahren nach Anspruch 2, wobei das Bestimmen (S14A) an der AMF von Slice-Frequenzbeschränkungs-Informationen basierend auf den Slice-Auswahlinformationen aufweist:
falls angeforderte Slice-Auswahlinformationen fehlen, Erzeugen einer Anforderung von Slice-Frequenzbeschränkungs-Informationen unter Verwendung von Vorgabe-Slice-Auswahlinformationen und, falls erforderlich, Abrufen von Teilnehmerinformationen vom 5GC; oder
falls die bedienten Slices (S4) nicht dieselben sind wie diejenigen, die in den angeforderten Slice-Auswahlinformationen (S11) enthalten sind, Erzeugen einer Anforderung von Slice-Frequenzbeschränkungs-Informationen unter Verwendung der bedienten Slices-Anforderung; oder
Erzeugen einer Anforderung von Slice-Frequenzbeschränkungs-Informationen unter Verwendung der angeforderten Slice-Auswahlinformationen, der Zellen-ID und/oder der Teilnehmer-ID, wie sie mit der Registrierungsanforderung vom RAN an die ausgewählte AMF empfangen werden.

4. Verfahren nach einem der Ansprüche 1 bis 3, das aufweist:
Triggern und Senden (S21A) vom RAN an die AMF einer Anforderung von Slice-Frequenzbeschränkungs-Informationen für einen gegebenen Slice oder Teilnehmer, wobei die Anforderung Slice-Auswahlinformationen, eine Zellen-ID und/oder eine Teilnehmer-ID enthält, oder
Triggern (S21B) an der AMF einer Aktualisierung von Slice-Frequenzbeschränkungs-Informationen basierend auf AMF-Triggerinformationen, oder
Triggern (S21C) an der Funktionseinheit einer Aktualisierung von Slice-Frequenzbeschränkungs-Informationen basierend auf Funktionseinheits-Triggerinformationen;
wenn die Aktualisierungsanforderung von Slice-Frequenzbeschränkungs-Informationen durch die RAN oder die AMF getriggert worden ist, Bestimmen (S22A) an der AMF von Slice-Frequenzbeschränkungs-Informationen, die abgerufen werden müssen, basierend auf den Informationen, die durch die RAN- oder die AMF-Triggerinformationen bereitgestellt werden, Erzeugen einer Anforderung von Slice-Frequenzbeschränkungs-Informationen basierend auf den bestimmten Slice-Frequenzbeschränkungs-Informationen und Senden (S22B) von der AMF an die Funktionseinheit der Anforderung von Slice-Frequenzbeschränkungs-Informationen;
Senden (S23) von der Funktionseinheit an die AMF einer Nachricht, die die angeforderten Slice-Frequenzbeschränkungs-Informationen aufweist;
Weiterleiten (S24) von der AMF an das RAN der Nachricht, die die Slice-Frequenzbeschränkungs-Informationen aufweist.

5. Verfahren nach Anspruch 4, wobei wenn die Aktualisierungsanforderung von Slice-Frequenzbeschränkungs-Informationen durch die RAN oder die AMF getriggert worden ist, das Bestimmen (S22A) der Slice-Frequenzbeschränkungs-Informationen, die abgerufen werden müssen, basierend auf den durch das RAN bereitgestellten Informationen aufweist:
falls angeforderte Slice-Auswahlinformationen fehlen, Erzeugen einer Anforderung von Slice-Frequenzbeschränkungs-Informationen unter Verwendung von konfigurierten Vorgabe-Slice-Auswahlinformationen für den gegebenen Teilnehmer und, falls erforderlich, Abrufen von Teilnehmerinformationen vom 5GC,
falls die AMF einen periodischen Trigger aufweist, um Slice-Frequenzbeschränkungs-Informationen für einen gegebenen Slice oder Satz von Slices zu aktualisieren, die durch die Slice-Auswahlinformationen identifiziert werden, Erzeugen einer Anforderung von Slice-Frequenzbeschränkungs-Informationen unter Verwendung von Slice-Auswahlinformationen,
falls die AMF einen periodischen Trigger aufweist, um Slice-Frequenzbeschränkungs-Informationen für eine gegebene Zelle zu aktualisieren, die durch die Zellen-ID identifiziert wird, Erzeugen einer Anforderung von Slice-Frequenzbeschränkungs-Informationen unter Verwendung der Zellen-ID,
falls die AMF eine neue Zelle erfasst, die durch die Zellen-ID identifiziert wird, die sich mit der AMF verbindet, Erzeugen einer Anforderung von Slice-Frequenzbeschränkungs-Informationen unter Verwendung der Zellen-ID, und/oder
falls die AMF konfiguriert ist, die Anforderung von Slice-Frequenzbeschränkungs-Informationen zu verwenden, die das RAN an die AMF gesendet hat (S21A), Erzeugen einer Anforderung von Slice-Frequenzbeschränkungs-Informationen unter Verwendung von Slice-Auswahlinformationen, die vom RAN empfangen werden.

6. Verfahren nach einem der Ansprüche 1 bis 5, wobei das Verfahren aufweist:
Senden durch die UE einer Registrierungsanforderung an den 5GC über das RAN, wobei die Registrierungsanforderung einen oder eine Kombination von Anforderungsparametern aufweist: Slice-Auswahlinformationen, Zellen-ID und/oder eine Teilnehmer-ID, und Empfangen an der UE einer Bestätigung, die anzeigt, dass die Registrierung erfolgreich durchgeführt worden ist (S31);
Triggern und Senden (S32A) von der UE an die AMF über das RAN (S32AA) einer Aktualisierung von Slice-Frequenzbeschränkungs-Informationen, die mit Slice-Auswahlinformationen oder einer Teilnehmer-ID verknüpft sind, oder
Triggern (S32B) durch die AMF einer Anforderung von Slice-Frequenzbeschränkungs-Informationen basierend auf AMF-Triggerinformationen, oder
Triggern (S32C) durch die Funktionseinheit einer Aktualisierung von Slice-Frequenzbeschränkungs-Informationen basierend auf Funktionseinheits-Triggerinformationen;
wenn die Anforderung von Slice-Frequenzbeschränkungs-Informationen durch die UE oder die AMF getriggert worden ist: Bestimmen (S33) an der AMF von Slice-Frequenzbeschränkungs-Informationen, die abgerufen werden müssen, basierend auf den Informationen, die durch die UE oder die AMF-Triggerinformationen bereitgestellt werden, Erzeugen einer Anforderung von Slice-Frequenzbeschränkungs-Informationen basierend auf den bestimmten Slice-Frequenzbeschränkungs-Informationen und Senden (S34) von der AMF an die Funktionseinheit der Anforderung von Slice-Frequenzbeschränkungs-Informationen;
Senden (S35) von der Funktionseinheit an die AMF einer Nachricht, die die angeforderten Slice-Frequenzbeschränkungs-Informationen aufweist;
Senden (S36A) von der AMF an die UE über das RAN (S36AA) einer Nachricht, die die Slice-Frequenzbeschränkungs-Informationen aufweist.

7. Verfahren nach einem der Ansprüche 1 bis 6, wobei die Funktionseinheit die Subskription an Änderungen zu spezifischen Slice-Frequenzbeschränkungs-Informationen durch 5GS-Komponenten und die anschließende Benachrichtigung der Änderungen zu den subskribierten 5GS-Komponenten unterstützt.

8. 5G-System, 5GS, das konfiguriert ist, Frequenzbeschränkungen auf Slices im 5GS anzuwenden, wobei das 5GS eine Benutzereinrichtung, UE; ein Funkzugangsnetzwerk, RAN, das aus Zellen besteht, die jeweils innerhalb des 5GS über eine Zellenkennung, Zellen-ID, eindeutig identifizierbar sind; und einen 5G-Kern, 5GC, aufweist; wobei der 5GC mindestens aufweist: eine Richtlinien-Steuerfunktion, PCF, eine oder mehrere einer Zugriffs- und Mobilitätsfunktionen, AMF, und einer Funktionseinheit; und wobei die UE und der 5GC Subskriptionsinformationen eines Benutzers enthalten, der innerhalb des 5GS über eine Teilnehmerkennung, ID, eindeutig identifizierbar ist, die es dem Benutzer ermöglicht, die UE zu verwenden, um auf einen oder mehrere Slices im 5GS zuzugreifen; wobei:
die Funktionseinheit konfiguriert ist, einen Satz von Slice-Frequenzbeschränkungs-Informationen zu speichern, die mit Slice-Auswahlinformationen, einer Zellen-ID und/oder mit einer Teilnehmer-ID verknüpft sind, wobei der Satz der Slice-Frequenzbeschränkungs-Informationen Benutzerebenen-, UP, Verkehrsbeschränkungen aufweist, wobei die Slice-Auswahlinformationen bestehen aus: Netzwerk-Slice-Auswahl-Unterstützungsinformationen, NSSAI; Einzel-NSSAI, S-NSSAI; einem Satz von S-NSSAI; oder
einer oder mehreren Kennungen, die jeweils einen Slice innerhalb des 5GS eindeutig identifizieren, und wobei die PCF einen Satz von UE-Routenauswahlrichtlinien-, URSPs, Regeln aufweist, wobei jede URSP-Regel mindestens die folgenden Parameter aufweist: einen Vorrangwert der URSP-Regel, eine Verkehrsbeschreibung und mindestens einen Routenauswahl-Deskriptor, der Slice-Frequenz-Auswahlbeschränkungen für gegebene Slice-Auswahlinformationen enthält;
beim Empfangen einer Bestätigung durch die UE, die angibt, dass eine Registrierung am 5GS erfolgreich durchgeführt worden ist:
die UE konfiguriert ist, eine Aktualisierung der URSPs zu triggern, die Slice-Frequenzbeschränkungs-Informationen enthalten, durch Senden einer Aktualisierungsanforderung von der UE an die PCF, über das RAN und AMF von Slice-Frequenzbeschränkungs-Informationen, oder
die PCF konfiguriert ist, eine Aktualisierung der URSPs zu triggern, die Slice-Frequenzbeschränkungs-Informationen enthalten, basierend auf PCF-Triggerinformationen durch Senden einer Aktualisierungsanforderung von Slice-Frequenzbeschränkungs-Informationen an die Funktionseinheit, oder
die Funktionseinheit konfiguriert ist, eine Aktualisierung der URSPs zu triggern, die Slice-Frequenzbeschränkungs-Informationen enthalten, durch Senden einer Benachrichtigung an subskribierte PCFs basierend auf Funktionseinheits-Triggerinformationen;
wenn die Aktualisierung durch die UE oder die PCF getriggert worden ist, die PCF konfiguriert ist: Slice-Frequenzbeschränkungs-Informationen zu bestimmen, die abgerufen werden müssen, basierend auf den Informationen, die durch das UE oder die PCF-Triggerinformationen bereitgestellt werden, und an die Funktionseinheit eine Anforderung der Slice-Frequenzbeschränkungs-Informationen zu senden;
beim Empfangen einer Anforderung von der UE oder der PCF, wobei die Anforderung einen oder eine Kombination von Anforderungsparametern aufweist: Slice-Auswahlinformationen, eine Zellen-ID, und/oder eine Teilnehmer-ID, die Funktionseinheit konfiguriert ist, eine Nachricht an die PCF zu senden, die die Slice-Frequenzbeschränkungs-Informationen aufweist, die mit einem oder mehrere der Anforderungsparameter übereinstimmen;
die PCF konfiguriert ist, eine oder mehrere URSP-Regeln zu erzeugen, die die UE anweisen, Verkehr gemäß den von der Funktionseinheit empfangenen Slice-Frequenzbeschränkungen zu leiten;
die PCF konfiguriert ist, an die UE eine Nachricht, die die erzeugten URSP-Informationen enthält, über die AMF und das RAN zu senden.

9. 5GS nach Anspruch 8, wobei der 5GC ferner eine einheitliche Datenverwaltungs-, UDM, Netzwerk-Slice-Auswahlfunktion, NSSF, aufweist, wobei:
die UE konfiguriert ist, an das RAN eine Registrierungsanforderung zu senden, wobei die Registrierungsanforderung einen oder eine Kombination von Registrierungsparametern aufweist: angeforderte Slice-Auswahlinformationen, eine Zellen-ID und/oder eine Teilnehmer-ID;
das RAN konfiguriert ist, eine AMF basierend auf den Registrierungsparametern auszuwählen;
das RAN konfiguriert ist, an die ausgewählte AMF die Registrierungsanforderung zu senden, die die angeforderten Slice-Auswahlinformationen, die Zellen-ID und/oder die Teilnehmer-ID enthält;
die ausgewählte AMF konfiguriert ist, eine Authentifizierung/Sicherheit zusammen mit der UDM durchzuführen;
die ausgewählte AMF konfiguriert ist, von der UDM oder von der lokalen Konfiguration an der AMF Teilnehmerinformationen abzurufen, die Slice-Auswahl-Subskriptionsdaten enthalten, wobei die Slice-Auswahl-Subskriptionsdaten einen Slice oder Slices angeben,
auf die ein Teilnehmer zugreifen darf, die durch die Slice-Auswahlinformationen identifiziert werden;
die ausgewählte AMF konfiguriert ist, zu prüfen, ob eine Slice-Auswahl benötigt wird, und wenn eine Slice-Auswahl benötigt wird, konfiguriert ist, von der NSSF, UDM oder von der lokalen Konfiguration an der AMF Slice-Auswahlinformationen abzurufen, und basierend auf den von der NSSF und/oder UDM abgerufenen Informationen konfiguriert ist, einen bedienten Slice oder bediente Slices zu bestimmen, auf die das UE durch das 5GS zugreifen darf, wobei der bediente Slice oder die bedienten Slices durch die Slice-Auswahlinformationen identifiziert werden;
die AMF konfiguriert ist, Slice-Frequenzbeschränkungs-Informationen, die abgerufen werden müssen, basierend auf den Slice-Auswahlinformationen der bedienten Slices zu bestimmen und eine Anforderung basierend auf den bestimmten Slice-Frequenzbeschränkungs-Informationen zu erzeugen;
die AMF konfiguriert ist, an die Funktionseinheit die Anforderung von Slice-Frequenzbeschränkungs-Informationen zu senden;
die Funktionseinheit konfiguriert ist, an die AMF eine Nachricht zu senden, die die angeforderten Slice-Frequenzbeschränkungs-Informationen aufweist;
die AMF konfiguriert ist, an das RAN eine Registrierungsantwort zu senden, die Slice-Frequenzbeschränkungs-Informationen für den bedienten Slice oder die bedienten Slices enthält, die für die UE bedient werden; und das RAN konfiguriert ist, die Registrierungsantwort an die UE weiterzuleiten.

10. 5GS nach Anspruch 9, wobei die Bestimmung an der AMF der Slice-Frequenzbeschränkungs-Informationen basierend auf den Slice-Auswahlinformationen aufweist:
falls angeforderte Slice-Auswahlinformationen fehlen, die AMF konfiguriert ist, eine Anforderung von Slice-Frequenzbeschränkungs-Informationen unter Verwendung von Vorgabe-Slice-Auswahlinformationen zu erzeugen, und, falls erforderlich, konfiguriert ist, Teilnehmerinformationen vom 5GC abzurufen; oder
falls die bedienten Slices nicht dieselben sind wie diejenigen, die in den angeforderten Slice-Auswahlinformationen enthalten sind, die AMF konfiguriert ist, eine Anforderung von Slice-Frequenzbeschränkungs-Informationen unter Verwendung der bedienten Slices-Anforderung zu erzeugen; oder
die AMF konfiguriert ist, eine Anforderung von Slice-Frequenzbeschränkungs-Informationen unter Verwendung der angeforderten Slice-Auswahlinformationen, Zellen-ID und/oder Teilnehmer-ID zu erzeugen, wie sie mit der Registrierungsanforderung vom RAN an die ausgewählte AMF empfangen werden.

11. 5GS nach einem der Ansprüche 8 bis 10, wobei:
das RAN konfiguriert ist, eine Anforderung von Slice-Frequenzbeschränkungs-Informationen für einen gegebenen Slice oder Teilnehmer zu triggern und an die AMF zu senden,
wobei die Anforderung Slice-Auswahlinformationen, eine Zellen-ID und/oder Teilnehmer-ID enthält, oder die AMF konfiguriert ist, eine Aktualisierung von Slice-Frequenzbeschränkungs-Informationen basierend auf den AMF-Triggerinformationen zu triggern,
oder die Funktionseinheit konfiguriert ist, eine Aktualisierung von Slice-Frequenzbeschränkungs-Informationen basierend auf Funktionseinheits-Triggerinformationen zu triggern;
wenn die Aktualisierungsanforderung von Slice-Frequenzbeschränkungs-Informationen durch die RAN oder die AMF getriggert worden ist, die AMF konfiguriert ist: Slice-Frequenzbeschränkungs-Informationen, die abgerufen werden müssen, basierend auf den Informationen zu bestimmen, die durch das RAN oder die AMF-Triggerinformationen bereitgestellt werden, eine Anforderung von Slice-Frequenzbeschränkungs-Informationen basierend auf den bestimmten Slice-Frequenzbeschränkungs-Informationen zu erzeugen, und an die Funktionseinheit die Anforderung von Slice-Frequenzbeschränkungs-Informationen zu senden;
die Funktionseinheit konfiguriert ist, an die AMF eine Nachricht zu senden, die die angeforderten Slice-Frequenzbeschränkungs-Informationen aufweist und die AMF konfiguriert ist, an das RAN die Nachricht weiterzuleiten, die die Slice-Frequenzbeschränkungs-Informationen aufweist,
wobei, wenn die Aktualisierungsanforderung von Slice-Frequenzbeschränkungs-Informationen durch die RAN oder die AMF getriggert worden ist, die Bestimmung von Slice-Frequenzbeschränkungs-Informationen, die abgerufen werden müssen, basierend auf den durch das RAN bereitgestellten Informationen aufweist:
falls angeforderte Slice-Auswahlinformationen fehlen, die AMF konfiguriert ist, eine Anforderung von Slice-Frequenzbeschränkungs-Informationen unter Verwendung von konfigurierten Vorgabe-Slice-Auswahlinformationen für den gegebenen Teilnehmer zu erzeugen und, falls erforderlich, Teilnehmerinformationen vom 5GC abzurufen,
falls die bedienten Slices nicht dieselben sind, die der Teilnehmer angeforderte, die AMF konfiguriert ist, eine Anforderung von Slice-Frequenzbeschränkungs-Informationen unter Verwendung der bedienten Slices für die Anforderung zu erzeugen,
falls die AMF einen periodischen Trigger aufweist, um Slice-Frequenzbeschränkungs-Informationen für einen gegebenen Slice oder Satz von Slices zu aktualisieren, die durch die Slice-Auswahlinformationen identifiziert werden, die AMF konfiguriert ist, eine Anforderung von Slice-Frequenzbeschränkungs-Informationen unter Verwendung von Slice-Auswahlinformationen zu erzeugen, und/oder
falls die AMF konfiguriert ist, die Anforderung von Slice-Frequenzbeschränkungs-Informationen zu verwenden, die das RAN an die AMF gesendet hat, die AMF konfiguriert ist, eine Anforderung von Slice-Frequenzbeschränkungs-Informationen unter Verwendung von Slice-Auswahlinformationen zu erzeugen, die vom RAN empfangen werden.

12. 5GS nach einem der Ansprüche 8 bis 11, wobei:
die UE konfiguriert ist, eine Registrierungsanforderung an den 5GC über das RAN zu senden, wobei die Registrierungsanforderung einen oder eine Kombination von Anforderungsparametern aufweist: Slice-Auswahlinformationen, eine Zellen-ID und/oder eine Teilnehmer-ID, und an der UE eine Bestätigung zu empfangen, die anzeigt, dass die Registrierung erfolgreich durchgeführt worden ist;
die UE konfiguriert ist, über das RAN eine Aktualisierung von Slice-Frequenzbeschränkungs-Informationen zu triggern und an die AMF zu senden, die mit Slice-Auswahlinformationen verknüpft sind, oder
die AMF konfiguriert ist, eine Anforderung von Slice-Frequenzbeschränkungs-Informationen basierend auf AMF-Triggerinformationen zu triggern, oder
die Funktionseinheit konfiguriert ist, eine Aktualisierung von Slice-Frequenzbeschränkungs-Informationen basierend auf Funktionseinheits-Triggerinformationen zu triggern;
wenn der Anforderung von Slice-Frequenzbeschränkungs-Informationen durch die UE oder die AMF getriggert worden ist: die AMF konfiguriert ist: Slice-Frequenzbeschränkungs-Informationen, die abgerufen werden müssen, basierend auf den Informationen zu bestimmen, die durch die UE oder die AMF-Triggerinformationen bereitgestellt werden,
eine Anforderung von Slice-Frequenzbeschränkungs-Informationen basierend auf den bestimmten Slice-Frequenzbeschränkungs-Informationen zu erzeugen, und an die Funktionseinheit die Anforderung von Slice-Frequenzbeschränkungs-Informationen zu senden;
die Funktionseinheit konfiguriert ist, an die AMF eine Nachricht zu senden, die die angeforderten Slice-Frequenzbeschränkungs-Informationen aufweist;
die AMF konfiguriert ist, an die UE über das RAN eine Nachricht zu senden, die die Slice-Frequenzbeschränkungs-Informationen aufweist.

13. Verfahren nach einem der Ansprüche 1 bis 7 oder das 5GS nach einem der Ansprüche 8 bis 12, wobei die Slice-Frequenzbeschränkungs-Informationen für gegebene Slice-Auswahlinformationen, eine Zellen-ID oder eine Teilnehmer-ID, irgendeine der folgenden Informationen aufweisen: nicht zulässige Frequenzen, zulässige Frequenzen, zulässige Frequenzen für die Steuerebene, eine Zellen-ID, eine Teilnehmer-ID und eine Netzwerckennung,
wobei die nicht zulässigen Frequenzen eine Liste von Frequenzen oder Frequenzbereichen angeben, die die durch die Slice-Auswahlinformationen angegebenen Slices nicht verwenden dürfen,
wobei die zulässigen Frequenzen eine Liste von Frequenzen oder Frequenzbereichen angeben, die die durch die Slice-Auswahlinformationen angegebenen Slices verwenden dürfen,
wobei in einem 5GS, das sowohl Steuerebenen-, CP, als auch Benutzerebenen-, UP, oder nur UP-Slice-Frequenzbeschränkungen unterstützt, die zulässigen Frequenzen für die Steuerebene angeben, ob die nicht zulässigen Frequenzbeschränkungen für CP und UP oder nur für UP gelten, und in der, falls sie nur für UP gelten, URSPs-Regeln zum Einstellen von Slice-Frequenzbeschränkungen in der UE verwendet werden;
wobei in einem 5GS, das nur CP- und UP-Slice-Frequenzbeschränkungen unterstützt, die zulässigen Frequenzen für die Steuerebene angeben, dass kein Parameter benötigt wird und keine URSPs-Regeln zum Einstellen von Slice-Frequenzbeschränkungen in der UE verwendet werden;
wobei in einem 5GS, das nur UP-Slice-Frequenzbeschränkungen unterstützt, die zulässigen Frequenzen für die Steuerebene angeben, dass kein Parameter benötigt wird und URSPs-Regeln zum Einstellen von Slice-Frequenzbeschränkungen in der UE verwendet werden;
wobei die Teilnehmerkennung eine oder mehrere Teilnehmerkennungen enthält, die angeben, für welchen Teilnehmer oder welche Teilnehmer diese Einschränkung gültig ist, und in dem Fall, dass die Teilnehmerkennungsinformationen fehlen, sich die Einschränkung nicht auf einen bestimmten Teilnehmer bezieht und für alle Teilnehmer gültig sein kann;
wobei die Zellenkennung eine oder mehrere Zellenkennungen enthält, die angeben, für welche Zelle oder Zellen diese Einschränkung gültig ist, und in dem Fall, dass die Zellenkennungsinformationen fehlen, sich die Einschränkung nicht auf eine bestimmte Zelle bezieht und für alle Zellen gültig sein kann; und/oder
wobei die Netzwerkkennung eine oder mehrere Netzwerkkennungen enthält, die angeben, in welchem Netzwerk oder in welchen Netzwerken diese Beschränkung gültig ist, und in dem Fall, dass die Netzwerkidentifizierungsinformationen fehlen, sich die Einschränkung nicht auf ein bestimmtes Netzwerk bezieht und für irgendein Netzwerk gültig sein kann.

## Revendications

1. Procédé d'application de restrictions de fréquence à des tranches dans un système 5G 5GS, ledit 5GS comprenant un équipement utilisateur UE ; un réseau d'accès radio RAN, composé de cellules, identifiables chacune de manière unique à l'intérieur du 5GS via un identifiant ID de cellule ; et un noyau 5G 5GC ; où le 5GC comprend au moins : une fonction de commande de politique PCF, une ou plusieurs fonctions d'accès et de mobilité AMF, et une entité fonctionnelle ; et où l'UE et le 5GC contiennent des informations d'abonnement d'un utilisateur, identifiables de manière unique à l'intérieur du 5GS via un identifiant d'abonné ID, permettant à l'utilisateur d'utiliser l'UE pour accéder à une ou plusieurs tranches dans le 5GS, ledit procédé comprenant :
la mémorisation, par l'entité fonctionnelle, d'un ensemble d'informations de restrictions de fréquence de tranche associées à des informations de sélection de tranche, un ID de cellule, et/ou à un ID d'abonné, l'ensemble d'informations de restrictions de fréquence de tranche comprenant des restrictions de trafic de plan d'utilisateur UP, les informations de sélection de tranche étant constituées de : informations d'aide à la sélection de tranches de réseau NSSAI ; une NSSAI unique S-NSSAI ; un ensemble de S-NSSAI ; ou un ou
plusieurs identifiants, identifiant chacun de manière unique une tranche à l'intérieur du 5GS, et la PCF comprenant un ensemble de règles des politiques de sélection de route d'UE URSP, chaque règle URSP comprenant au moins les paramètres suivants : valeur de priorité de règle URSP, description de trafic, et au moins un descripteur de sélection de route contenant des restrictions de sélection de fréquence de tranche pour des informations de sélection de tranche données ;
par réception, par l'UE, d'une confirmation indiquant qu'un enregistrement auprès du 5GS a été effectué avec succès (S41) :
le déclenchement (S42A), par l'UE, d'une mise à jour d'URSP contenant des informations de restrictions de fréquence de tranche par envoi d'une demande de mise à jour de l'UE à la PCF, via le RAN (S42AA) et l'AMF (S42AAA), pour des informations de restrictions de fréquence de tranche, ou
le déclenchement (S42B), par la PCF, d'une mise à jour d'URSP contenant des informations de restrictions de fréquence de tranche, sur la base d'informations de déclenchement de PCF, par envoi d'une demande de mise à jour pour des informations de restrictions de fréquence de tranche à l'entité fonctionnelle, ou
le déclenchement (S42C), par l'entité fonctionnelle, d'une mise à jour d'URSP contenant des informations de restrictions de fréquence de tranche par envoi d'une notification aux PCF souscrites, sur la base d'informations de déclenchement d'entité fonctionnelle ;
si la mise à jour a été déclenchée par l'UE ou la PCF : la détermination (S43), au niveau de la PCF, d'informations de restrictions de fréquence de tranche nécessitant d'être récupérées sur la base des informations délivrées par l'UE ou des informations de déclenchement de PCF, et l'envoi (S44), de la PCF à l'entité fonctionnelle, d'une demande pour les informations de restrictions de fréquence de tranche ;
par réception d'une demande de l'UE ou de la PCF, ladite demande comprenant un paramètre, ou une combinaison de paramètres de demande : informations de sélection de tranche, un ID de cellule, et/ou un ID d'abonné ; l'envoi (S45), de l'entité fonctionnelle à la PCF, d'un message comprenant les informations de restrictions de fréquence de tranche correspondant à un ou à plusieurs des paramètres de demande ;
la création (S45B), par la PCF, d'une ou de plusieurs règles URSP commandant le routage du trafic par l'UE en fonction des restrictions de fréquence de tranche reçues de l'entité fonctionnelle ;
l'envoi (S46A), de la PCF à l'UE, d'un message comprenant les informations URSP générées via l'AMF et le RAN (S46AA, S46AAA).

2. Procédé selon la revendication 1, où le 5GC comprend en outre une fonctionnalité de sélection de tranche de réseau NSSF de gestion unifiée des données UDM, ledit procédé comprenant en outre :
l'envoi (S11), de l'UE au RAN, d'une demande d'enregistrement, ladite demande d'enregistrement comprenant un paramètre, ou une combinaison de paramètres d'enregistrement : informations de sélection de tranche demandées, un ID de cellule et/ou un ID d'abonné ;
la sélection (S12), au niveau du RAN, d'une AMF sur la base des paramètres d'enregistrement ;
l'envoi (S13), du RAN à l'AMF sélectionnée, de la demande d'enregistrement comprenant les informations de sélection de tranche demandées, un ID de cellule, et/ou ID d'abonné ;
l'exécution (S4), au niveau de l'AMF sélectionnée, d'une authentification/sécurité avec l'UDM;
la récupération (S5), au niveau de l'AMF sélectionnée, de l'UDM ou d'une configuration locale au niveau de l'AMF, d'informations d'abonné comprenant des données de souscription de sélection de tranche, lesdites données de souscription de sélection de tranche indiquant la tranche ou les tranches auxquelles un abonné est autorisé à accéder identifiées par des informations de sélection de tranche ;
la vérification, au niveau de l'AMF sélectionnée, si une sélection de tranche est nécessitée, et, si une sélection de tranche est nécessitée, la récupération (S6), de la NSSF, l'UDM ou de la configuration locale au niveau de l'AMF, d'informations de sélection de tranche, et sur la base des informations récupérées de la configuration locale, la NSSF, l'UDM et/ou des informations de sélection de tranche demandées reçues, la détermination (S7A) d'une tranche desservie ou de tranches desservies auxquelles l'UE sera autorisé à accéder par le 5GS, la ou les tranches desservies étant identifiées par des informations de sélection de tranche ;
la détermination (S14A), au niveau de l'AMF, d'informations de restrictions de fréquence de tranche nécessitant d'être récupérées sur la base des informations de sélection de tranche des tranches desservies, et la création d'une demande sur la base des informations de restrictions de fréquence de tranche déterminées ;
l'envoi (S14B), par l'AMF à l'entité fonctionnelle, de la demande pour des informations de restrictions de fréquence de tranche ;
l'envoi (S15), de l'entité fonctionnelle à l'AMF, d'un message comprenant les informations de restrictions de fréquence de tranche demandées ;
l'envoi (S16), de l'AMF au RAN, d'une réponse d'enregistrement comprenant les informations de restrictions de fréquence de tranche pour la tranche desservie ou les tranches desservies à l'UE ; et
la transmission (S17) de la réponse d'enregistrement du RAN à l'UE.

3. Procédé selon la revendication 2, où la détermination (S14A), au niveau de l'AMF, d'informations de restrictions de fréquence de tranche sur la base des informations de sélection de tranche comprend :
en cas d'absence d'informations de sélection de tranche demandées, la création d'une demande pour des informations de restrictions de fréquence de tranche au moyen d'informations de sélection de tranche par défaut et, si nécessaire, la récupération d'informations d'abonné du 5GC ; ou
dans le cas où les tranches desservies (S4) ne sont pas identiques à celles contenues dans les informations de sélection de tranche demandées (S11), la création d'une demande pour des informations de restrictions de fréquence de tranche au moyen de la demande de tranches desservies ; ou
la création d'une demande pour des informations de restrictions de fréquence de tranche au moyen des informations de sélection de tranche demandées, ID de cellule et/ou ID d'abonné, telles que reçues avec la demande d'enregistrement du RAN à l'AMF sélectionnée.

4. Procédé selon l'une des revendications 1 à 3, comprenant :
le déclenchement et l'envoi (S21A), du RAN à l'AMF, d'une demande pour des informations de restrictions de fréquence de tranche pour une tranche ou un abonné donnés, ladite demande comprenant des informations de sélection de tranche, un ID de cellule et/ou un ID d'abonné, ou
le déclenchement (S21B), au niveau de l'AMF, d'une mise à jour d'informations de restrictions de fréquence de tranche sur la base d'informations de déclenchement d'AMF, ou
le déclenchement (S21C), au niveau de l'entité fonctionnelle, d'une mise à jour d'informations de restrictions de fréquence de tranche sur la base d'informations de déclenchement d'entité fonctionnelle ;
si la demande de mise à jour pour des informations de restrictions de fréquence de tranche a été déclenchée par le RAN ou l'AMF, la détermination (S22A), au niveau de l'AMF, d'informations de restrictions de fréquence de tranche nécessitant d'être récupérées sur la base des informations délivrées par le RAN ou d'informations de déclenchement d'AMF, la création d'une demande pour des informations de restrictions de fréquence de tranche sur la base des informations de restrictions de fréquence de tranche déterminées, et l'envoi (S22B), de l'AMF à l'entité fonctionnelle, de la demande pour des informations de restrictions de fréquence de tranche ;
l'envoi (S23), de l'entité fonctionnelle à l'AMF, d'un message comprenant les informations de restrictions de fréquence de tranche demandées ;
la transmission (S24), de l'AMF au RAN, du message comprenant les informations de restrictions de fréquence de tranche.

5. Procédé selon la revendication 4, où, si la demande de mise à jour pour des informations de restrictions de fréquence de tranche a été déclenchée par le RAN ou l'AMF, la détermination (S22A) d'informations de restrictions de fréquence de tranche nécessitant d'être récupérées sur la base des informations délivrées par le RAN comprend :
en cas d'absence d'informations de sélection de tranche demandées, la création d'une demande pour des informations de restrictions de fréquence de tranche au moyen d'informations de sélection de tranche configurées par défaut pour l'abonné donné, et, si nécessaire, la récupération d'informations d'abonné du 5GC,
dans le cas où l'AMF a un déclencheur périodique pour mettre à jour des informations de restrictions de fréquence de tranche pour une tranche ou un ensemble de tranches donnés identifiés par des informations de sélection de tranche, la création d'une demande pour des informations de restrictions de fréquence de tranche au moyen d'informations de sélection de tranche,
dans le cas où l'AMF a un déclencheur périodique pour mettre à jour des informations de restrictions de fréquence de tranche pour une cellule donnée identifiée par ID de cellule, la création d'une demande pour des informations de restrictions de fréquence de tranche au moyen de l'ID de cellule,
dans le cas où l'AMF détecte une nouvelle cellule identifiée par ID de cellule connecté à l'AMF, la création d'une demande pour des informations de restrictions de fréquence de tranche au moyen de l'ID de cellule, et/ou
dans le cas où l'AMF est configurée pour utiliser la demande pour des informations de restrictions de fréquence de tranche que le RAN a envoyées (S21A) à l'AMF, la création d'une demande pour des informations de restrictions de fréquence de tranche au moyen d'informations de sélection de tranche reçues du RAN.

6. Procédé selon l'une des revendications 1 à 5, ledit procédé comprenant :
l'envoi par l'UE d'une demande d'enregistrement au 5GC via le RAN, où la demande d'enregistrement comprend un paramètre, ou une combinaison de paramètres de demande : informations de sélection de tranche, un ID de cellule, et/ou un ID d'abonné, et la réception, au niveau de l'UE, d'une confirmation indiquant que l'enregistrement a été effectué avec succès (S31) ;
le déclenchement et l'envoi (S32A), de l'UE à l'AMF, via le RAN (S32AA), d'une mise à jour pour des informations de restrictions de fréquence de tranche associées à des informations de sélection de tranche ou ID d'abonné, ou
le déclenchement (S32B), par l'AMF, d'une demande pour des informations de restrictions de fréquence de tranche sur la base d'informations de déclenchement d'AMF,
ou
le déclenchement (S32C), par l'entité fonctionnelle, d'une mise à jour d'informations de restrictions de fréquence de tranche sur la base d'informations de déclenchement d'entité fonctionnelle ;
si la demande pour des informations de restrictions de fréquence de tranche a été déclenchée par l'UE ou l'AMF : la détermination (S33), au niveau de l'AMF, d'informations de restrictions de fréquence de tranche nécessitant d'être récupérées sur la base des informations délivrées par l'UE ou d'informations de déclenchement d'AMF, la création d'une demande pour des informations de restrictions de fréquence de tranche sur la base des informations de restrictions de fréquence de tranche déterminées, et l'envoi (S34), de l'AMF à l'entité fonctionnelle, de la demande pour des informations de restrictions de fréquence de tranche ;
l'envoi (S35), de l'entité fonctionnelle à l'AMF, d'un message comprenant les informations de restrictions de fréquence de tranche demandées ;
l'envoi (S36A), de l'AMF à l'UE, via le RAN (S36AA), d'un message comprenant les informations de restrictions de fréquence de tranche.

7. Procédé selon l'une des revendications 1 à 6, où l'entité fonctionnelle assiste des modifications par l'abonnement d'informations spécifiques de restrictions de fréquence de tranche par des composants 5GS et la notification consécutive desdites modifications vers les composants 5GS souscrits.

8. Système 5G 5GS, configuré pour appliquer des restrictions de fréquence à des tranches dans ledit 5GS, ledit 5GS comprenant un équipement utilisateur UE ; un réseau d'accès radio RAN, composé de cellules, identifiables chacune de manière unique à l'intérieur du 5GS via un identifiant ID de cellule ; et un noyau 5G 5GC ; où le 5GC comprend au moins : une fonction de commande de politique PCF, une ou plusieurs fonctions d'accès et de mobilité AMF, et une entité fonctionnelle ; et où l'UE et le 5GC contiennent des informations d'abonnement d'un utilisateur, identifiables de manière unique à l'intérieur du 5GS via un identifiant d'abonné ID, permettant à l'utilisateur d'utiliser l'UE pour accéder à une ou plusieurs tranches dans le 5GS ; où :
l'entité fonctionnelle est configurée pour mémoriser un ensemble d'informations de restrictions de fréquence de tranche associées à des informations de sélection de tranche,
un ID de cellule, et/ou à un ID d'abonné, l'ensemble d'informations de restrictions de fréquence de tranche comprenant des restrictions de trafic de plan d'utilisateur UP, les informations de sélection de tranche étant constituées de : informations d'aide à la sélection de tranches de réseau NSSAI ; une NSSAI unique S-NSSAI ; un ensemble de S-NSSAI ; ou un ou plusieurs identifiants, identifiant chacun de manière unique une tranche à l'intérieur du 5GS, et la PCF comprenant un ensemble de règles des politiques de sélection de route d'UE URSP, chaque règle URSP comprenant au moins les paramètres suivants : valeur de priorité de règle URSP, description de trafic, et au moins un descripteur de sélection de route contenant des restrictions de sélection de fréquence de tranche pour des informations de sélection de tranche données ;
par réception, par l'UE, d'une confirmation indiquant qu'un enregistrement vers le 5GS a été effectué avec succès :
l'UE est configuré pour déclencher une mise à jour d'URSP contenant des informations de restrictions de fréquence de tranche par envoi d'une demande de mise à jour de l'UE à la PCF, via le RAN et AMF, pour des informations de restrictions de fréquence de tranche, ou
la PCF est configurée pour déclencher une mise à jour d'URSP contenant des informations de restrictions de fréquence de tranche, sur la base d'informations de déclenchement de PCF, par envoi d'une demande de mise à jour pour des informations de restrictions de fréquence de tranche à l'entité fonctionnelle, ou
l'entité fonctionnelle est configurée pour déclencher une mise à jour d'URSP contenant des informations de restrictions de fréquence de tranche par envoi d'une notification aux PCF souscrites, sur la base d'informations de déclenchement d'entité fonctionnelle ;
si la mise à jour a été déclenchée par l'UE ou la PCF, la PCF est configurée pour : déterminer des informations de restrictions de fréquence de tranche nécessitant d'être récupérées sur la base des informations délivrées par l'UE ou des informations de déclenchement de PCF, et envoyer à l'entité fonctionnelle une demande pour les informations de restrictions de fréquence de tranche ;
par réception d'une demande de l'UE ou de la PCF, la demande comprenant un paramètre, ou une combinaison de paramètres de demande : informations de sélection de tranche, un ID de cellule, et/ou un ID d'abonné, l'entité fonctionnelle est configurée pour envoyer un message à la PCF comprenant les informations de restrictions de fréquence de tranche correspondant à un ou à plusieurs des paramètres de demande ;
la PCF est configurée pour créer une ou plusieurs règles URSP commandant le routage du trafic par l'UE en fonction des restrictions de fréquence de tranche reçues de l'entité fonctionnelle ;
la PCF est configurée pour envoyer à l'UE un message comprenant les informations URSP générées via l'AMF et le RAN.

9. 5GS selon la revendication 8, où le 5GC comprend en outre une fonctionnalité de sélection de tranche de réseau NSSF de gestion unifiée des données UDM, où :
l'UE est configurée pour envoyer au RAN une demande d'enregistrement, ladite demande d'enregistrement comprenant un paramètre, ou une combinaison de paramètres d'enregistrement : informations de sélection de tranche demandées, un ID de cellule et/ou un ID d'abonné ;
le RAN est configuré pour sélectionner une AMF sur la base des paramètres d'enregistrement ;
le RAN est configuré pour envoyer à l'AMF sélectionnée la demande d'enregistrement comprenant les informations de sélection de tranche demandées, ID de cellule, et/ou ID d'abonné ;
l'AMF sélectionnée est configurée pour exécuter une authentification/sécurité avec l'UDM;
l'AMF sélectionnée est configurée pour récupérer de l'UDM ou d'une configuration locale au niveau de l'AMF, des informations d'abonné comprenant des données de souscription de sélection de tranche, lesdites données de souscription de sélection de tranche indiquant la tranche ou les tranches auxquelles un abonné est autorisé à accéder identifiées par des informations de sélection de tranche ;
l'AMF sélectionnée est configurée pour vérifier si une sélection de tranche est nécessitée, et, si une sélection de tranche est nécessitée, pour récupérer de la NSSF, l'UDM ou de la configuration locale au niveau de l'AMF, des informations de sélection de tranche, et sur la base des informations récupérées de la configuration locale, la NSSF et/ou de l'UDM,
pour déterminer une tranche desservie ou des tranches desservies auxquelles l'UE sera autorisé à accéder par le 5GS, la ou les tranches desservies étant identifiées par des informations de sélection de tranche ;
l'AMF est configurée pour déterminer des informations de restrictions de fréquence de tranche nécessitant d'être récupérées sur la base des informations de sélection de tranche des tranches desservies, et pour créer une demande sur la base des informations de restrictions de fréquence de tranche déterminées ;
l'AMF est configurée pour envoyer à l'entité fonctionnelle la demande pour des informations de restrictions de fréquence de tranche ;
l'entité fonctionnelle est configurée pour envoyer à l'AMF un message comprenant les informations de restrictions de fréquence de tranche demandées ;
l'AMF est configurée pour envoyer au RAN une réponse d'enregistrement comprenant les informations de restrictions de fréquence de tranche pour la tranche desservie ou les tranches desservies à l'UE ; et le RAN est configuré pour transmettre la réponse d'enregistrement à l'UE.

10. 5GS selon la revendication 9, où la détermination, au niveau de l'AMF, d'informations de restrictions de fréquence de tranche sur la base des informations de sélection de tranche comprend :
en cas d'absence d'informations de sélection de tranche demandées, l'AMF est configurée pour créer une demande pour des informations de restrictions de fréquence de tranche au moyen d'informations de sélection de tranche par défaut et, si nécessaire, est configurée pour récupérer des informations d'abonné du 5GC ; ou
dans le cas où les tranches desservies ne sont pas identiques à celles contenues dans les informations de sélection de tranche demandées, l'AMF est configurée pour créer une demande pour des informations de restrictions de fréquence de tranche au moyen de la demande de tranches desservies ; ou
l'AMF est configurée pour créer une demande pour des informations de restrictions de fréquence de tranche au moyen des informations de sélection de tranche demandées, ID de cellule et/ou ID d'abonné, telles que reçues avec la demande d'enregistrement du RAN à l'AMF sélectionnée.

11. 5GS selon l'une des revendications 8 à 10, où :
le RAN est configuré pour déclencher et pour envoyer à l'AMF une demande pour des informations de restrictions de fréquence de tranche pour une tranche ou un abonné donnés, ladite demande comprenant des informations de sélection de tranche, un ID de cellule et/ou un ID d'abonné, ou
l'AMF est configurée pour déclencher une mise à jour d'informations de restrictions de fréquence de tranche sur la base d'informations de déclenchement d'AMF, ou l'entité fonctionnelle est configurée pour déclencher une mise à jour d'informations de restrictions de fréquence de tranche sur la base d'informations de déclenchement d'entité fonctionnelle ;
si la demande de mise à jour pour des informations de restrictions de fréquence de tranche a été déclenchée par le RAN ou l'AMF, l'AMF est configurée pour : déterminer des informations de restrictions de fréquence de tranche nécessitant d'être récupérées sur la base des informations délivrées par le RAN ou d'informations de déclenchement d'AMF, créer une demande pour des informations de restrictions de fréquence de tranche sur la base des informations de restrictions de fréquence de tranche déterminées, et envoyer à l'entité fonctionnelle la demande pour des informations de restrictions de fréquence de tranche ;
l'entité fonctionnelle est configurée pour envoyer à l'AMF un message comprenant les informations de restrictions de fréquence de tranche demandées et l'AMF est configurée pour transmettre au RAN le message comprenant les informations de restrictions de fréquence de tranche,
où, si la demande de mise à jour pour des informations de restrictions de fréquence de tranche a été déclenchée par le RAN ou l'AMF, la détermination d'informations de restrictions de fréquence de tranche nécessitant d'être récupérées sur la base des informations délivrées par le RAN, comprend :
en cas d'absence d'informations de sélection de tranche demandées, l'AMF est configurée pour créer une demande pour des informations de restrictions de fréquence de tranche au moyen d'informations de sélection de tranche configurées par défaut pour l'abonné donné, et, si nécessaire, pour récupérer des informations d'abonné du 5GC, dans le cas où les tranches desservies ne sont pas identiques à celles que l'abonné a demandées, l'AMF est configurée pour créer une demande pour des informations de restrictions de fréquence de tranche au moyen des tranches desservies pour la demande, dans le cas où l'AMF a un déclencheur périodique pour mettre à jour des informations de restrictions de fréquence de tranche pour une tranche ou un ensemble de tranches donnés identifiés par des informations de sélection de tranche, l'AMF est configurée pour créer une demande pour des informations de restrictions de fréquence de tranche au moyen d'informations de sélection de tranche, et/ou
dans le cas où l'AMF est configurée pour utiliser la demande pour des informations de restrictions de fréquence de tranche que le RAN a envoyées à l'AMF, l'AMF est configurée pour créer une demande pour des informations de restrictions de fréquence de tranche au moyen d'informations de sélection de tranche reçues du RAN.

12. 5GS selon l'une des revendications 8 à 11, où :
l'UE est configurée pour envoyer une demande d'enregistrement au 5GC via le RAN, ladite demande d'enregistrement comprenant un paramètre, ou une combinaison de paramètres de demande : informations de sélection de tranche, un ID de cellule, et/ou un ID d'abonné, et pour recevoir, au niveau de l'UE, une confirmation indiquant que l'enregistrement a été effectué avec succès ;
l'UE est configurée pour déclencher et pour envoyer à l'AMF, via le RAN, une mise à jour pour des informations de restrictions de fréquence de tranche associées à des informations de sélection de tranche, ou
l'AMF est configurée pour déclencher une demande pour des informations de restrictions de fréquence de tranche sur la base d'informations de déclenchement d'AMF, ou l'entité fonctionnelle est configurée pour déclencher une mise à jour d'informations de restrictions de fréquence de tranche sur la base d'informations de déclenchement d'entité fonctionnelle ;
si la demande pour des informations de restrictions de fréquence de tranche a été déclenchée par l'UE ou l'AMF : l'AMF est configurée pour: déterminer des informations de restrictions de fréquence de tranche nécessitant d'être récupérées sur la base des informations délivrées par l'UE ou des informations de déclenchement d'AMF, créer une demande pour des informations de restrictions de fréquence de tranche sur la base des informations de restrictions de fréquence de tranche déterminées, et envoyer à l'entité fonctionnelle, la demande pour des informations de restrictions de fréquence de tranche ;
l'entité fonctionnelle est configurée pour envoyer à l'AMF un message comprenant les informations de restrictions de fréquence de tranche demandées ;
l'AMF est configurée pour envoyer à l'UE, via le RAN, un message comprenant les informations de restrictions de fréquence de tranche.

13. Procédé selon l'une des revendications 1 à 7 ou 5GS selon l'une des revendications 8 à 12, où les informations de restrictions de fréquence de tranche comprennent, pour des informations de sélection de tranche données, un ID de cellule ou un ID d'abonné, l'une des informations suivantes : fréquences non autorisées, fréquences autorisées, fréquences autorisées pour plan de commande, ID de cellule, ID d'abonné, et identifiant de réseau, où les fréquences non autorisées indiquent une liste de fréquences ou de plages de fréquence que les tranches données indiquées par les informations de sélection de tranche ne sont pas autorisées à utiliser,
où les fréquences autorisées indiquent une liste de fréquences ou de plages de fréquence que les tranches données indiquées par les informations de sélection de tranche sont autorisées à utiliser,
où, dans un 5GS assistant des restrictions de fréquence de tranche de plan de commande CP et de plan d'utilisateur UP ensemble, ou seulement d'UP, les fréquences autorisées pour plan de commande indiquent si les restrictions de fréquence non autorisées s'appliquent au CP et à l'UP ensemble ou seulement à l'UP, et dans le cas où elles s'appliquent seulement à l'UP, des règles URSP sont utilisées pour fixer des restrictions de fréquence de tranche dans l'UE ;
où, dans un 5GS assistant seulement des restrictions de fréquence de tranche CP et UP, les fréquences autorisées pour plan de commande indiquent qu'un paramètre n'est pas exigé et des règles URSP ne sont pas utilisées pour fixer des restrictions de fréquence de tranche dans l'UE ;
où, dans un 5GS assistant seulement des restrictions de fréquence de tranche UP, les fréquences autorisées pour plan de commande indiquent qu'un paramètre n'est pas exigé et des règles URSP sont utilisées pour fixer des restrictions de fréquence de tranche dans l'UE;
où l'identifiant d'abonné contient un ou plusieurs identifiants d'abonné indiquant l'abonné ou les abonnés pour lesquels cette restriction est valide, et où, en cas d'absence des informations d'identifiant d'abonné, la restriction ne se rapporte à aucun abonné en particulier et peut être valide pour tous les abonnés ;
où l'identifiant de cellule contient un ou plusieurs identifiant de cellules indiquant la ou
les cellules pour lesquelles cette restriction est valide, et où, en cas d'absence des informations d'identifiant de cellule, la restriction ne se rapporte à aucune cellule en particulier et peut être valide pour tous les cellules ; et/ou
où l'identifiant de réseau contient un ou plusieurs identifiants de réseau indiquant le ou les réseaux dans lesquels cette restriction est valide, et où, en cas d'absence des informations d'identifiant de réseau, la restriction ne se rapporte à aucun réseau en particulier et peut être valide pour tout réseau.
